# EUROPEAN PATENT SPECIFICATION

(11) **EP 3 323 703 B1**
(45) Date of publication and mention of the grant of the patent: **11.09.2019**
(21) Application number: 16824062.0
(22) Date of filing: 11.07.2016
(51) Int. Cl.: B62M 6/55, B62M 11/06, B62M 25/08, F16D 41/24, F16H 63/30

(54) **ELECTRIC-ASSIST BICYCLE**
FAHRRAD MIT ELEKTRISCHEM HILFSFANTRIEB
BICYCLETTE À ASSISTANCE ÉLECTRIQUE

(30) Priority: 14.07.2015 JP 2015140180
(43) Date of publication of application: 23.05.2018
(73) Proprietor: Panasonic Intellectual Property Management Co., Ltd., Osaka-shi, Osaka 540-6207 (JP)
(72) Inventor: KAWAKAMI, Masafumi, Osaka-shi Osaka 540-6207 (JP); FUJII, Naoki, Osaka-shi Osaka 540-6207 (JP); NISHIMORI, Masato, Osaka-shi Osaka 540-6207 (JP)
(74) Representative: Grünecker Patent- und Rechtsanwälte PartG mbB
(86) International application number: PCT/JP2016/003268
(87) International publication number: WO 2017/010077

(56) References cited:
- EP-A1- 0 832 816
- EP-A2- 1 103 455
- WO-A1-2014/172422
- JP-A- H08 230 750
- JP-A- H11 240 481
- JP-B1- 5 523 636
- US-A1- 2014 221 151
- US-B1- 6 607 465

## Description

### TECHNICAL FIELD

The present invention relates to an electric assist bicycle provided with a driving unit.

### BACKGROUND ART

An electric assist bicycle which includes a motor that supplies power from a condenser, such as a battery, and can also freely travel on an upward slope or the like by detecting a human power driving force obtained by a pedaling force applied to a pedal and by adding an auxiliary driving force (assist force) of a motor that corresponds to the human power driving force, is already known.

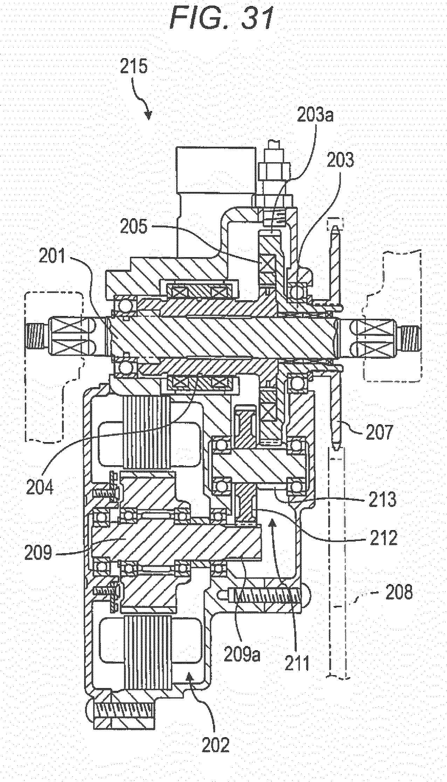

As a driving unit provided in an electric assist bicycle of the related art, for example, as illustrated in Fig. 31, there is a driving unit which includes: a human power driving system including crank shaft 201; and a motor driving system which increases and decreases an output of motor 202 in accordance with a pedaling force applied to crank shaft 201, and in which tube-like resultant force shaft 203 is provided to be freely rotatable on the same shaft line as crank shaft 201 (for example, refer to PTL 1). Both driving systems are linked to one end of resultant force shaft 203, and a resultant force that is a combination of the human power driving system and the auxiliary driving force (assist force) is transmitted to a rear wheel of the electric assist bicycle from the other end of resultant force shaft 203.

Crank shaft 201 penetrates tube-like human power transmission shaft 204, and human power transmission shaft 204 is adjacent to resultant force shaft 203 and is provided to be freely rotatable on the same shaft line as crank shaft 201. In addition, one end of human power transmission shaft 204 is linked to resultant force shaft 203 via one-way clutch 205, and the other end of human power transmission shaft 204 is linked to crank shaft 201.

Plurality of teeth 203a are formed in an outer circumferential portion having a large diameter at one end of resultant force shaft 203. Output sprocket 207 which outputs the driving force (resultant force) is provided in the other end portion of resultant force shaft 203, and chain 208 which transmits the driving force (resultant force) to the rear wheel is wound around output sprocket 207. In addition, output gear 209a is formed in output shaft 209 of motor 202, and is installed in a state where gears 212 and 213 of decelerator 211 are meshed with each other between output gear 209a and teeth 203a of resultant force shaft 203.

According to the configuration, by stepping on a pedal, the human power driving force is transmitted to resultant force shaft 203 via human power transmission shaft 204 and one-way clutch 205 from crank shaft 201. In addition, an auxiliary driving force generated from motor 202 is transmitted to resultant force shaft 203 via decelerator 211, and resultant force shaft 203 rotates by the resultant force that is a combination of the human power driving force and the auxiliary driving force. In addition, as output sprocket 207 rotates together with resultant force shaft 203, the resultant force is transmitted to the rear wheel via chain 208, and the rear wheel rotates.

The prior art document US2014/221151A1 discloses a drive unit for an electric assist bicycle according to the preamble of claim 1.

### SUMMARY OF THE INVENTION

However, since driving unit 215 described above is not provided with a gear shift mechanism, in a case of traveling on a steep upward slope by the electric assist bicycle, there is a problem that an excessive load is applied to motor 202 or a passenger of the vehicle.

As a method of solving the problem, a method of providing a gear shift mechanism for switching a plurality of gear shift stages on the inside of driving unit 215, providing an operation lever that switches a gear shift stage in a handle, and transmitting movement of the lever to the gear shift mechanism via wire, is considered.

However, in this case, it is necessary to attach a gear shift stage wire transmission mechanism (so-called shifter for gear shifting) that changes an operation of the operation lever to an operation of the wire, to the handle, and there is a concern that the gear shift stage wire transmission mechanism interferes with the movement of a hand that holds the handle. In addition, the wire extends after many years of use, and there is a concern that the switching operation to the gear shift mechanism is not excellently performed.

The present invention provides an electric assist bicycle in which a resultant force transmitting body rotates by a resultant force that is a combination of a human power driving force and an auxiliary driving force, and in which a load of a motor or a passenger can be reduced, and further, there is not a case where the movement of the hand that holds a handle is interfered or a switching operation to a gear shift mechanism is not excellently performed, in a driving unit and the electric assist bicycle in which rotation of the resultant force transmitting body is transmitted to a rear wheel.

The present invention relates to an electric assist bicycle comprising a driving unit including a motor and a front wheel and a rear wheel. The electric assist bicycle can travel by adding an auxiliary driving force generated by the motor to a human power driving force generated by a pedaling force from a pedal. In addition, the driving unit is installed at an intermediate location between a front wheel and a rear wheel, a resultant force transmitting body that is freely rotatable by a resultant force that is a combination of a human power driving force and an auxiliary driving force, a driving force output shaft body to which rotation of the resultant force transmitting body is transmitted, and a gear shift mechanism which includes a plurality of selectable gear shift stages having different gear ratios and transmits a driving force to the resultant force transmitting body, are provided in the driving unit. The gear shift mechanism includes a plurality of transmission gears that includes a low speed stage transmission gear and a high speed stage transmission gear, and a gear shift stage switching body that moves in accordance with a selected gear shift stage, a switching body moving mechanism including a gear shift stage switching driving source that generates a driving force which moves the gear shift stage switching body is installed in the driving unit or in the vicinity of the driving unit. In addition, it is preferable that the shaft center of the rotation shaft of the motor and the shaft center of the crank shaft are different from each other.

According to the configuration, when traveling in an electric assist bicycle, by selecting the optimal gear shift stage in accordance with the inclination or the like of a traveling road surface, a load of the motor or a passenger has been reduced, and the traveling appropriate for the traveling road surface is performed. In addition, in the driving unit or in the vicinity of the driving unit, the switching body moving mechanism including the gear shift stage switching driving source which generates a driving force that moves the gear shift stage switching body is installed, and thus, the gear shift stage wire transmitting mechanism (so-called shifter for gear shifting) that changes an operation of an operation lever to an operation of wire may not be attached to a handle, and the movement of a hand that holds the handle is not interfered. In addition, since a failure of a switching operation to the gear shift mechanism due to extension of the wire is not generated, it is possible to excellently perform the switching operation to the gear shift mechanism.

### BRIEF DESCRIPTION OF DRAWINGS

FIG. 1 is a left side view of an entire electric assist bicycle according to an embodiment of the present invention.
FIG. 2 is a left side view of a driving unit according to the embodiment of the present invention.
FIG. 3 is a right side view in a state where a crank arm driving sprocket or a right case of the driving unit according to the embodiment of the present invention is detached.
FIG. 4 is a plan sectional view in a state where a gear shift stage of the driving unit according to the embodiment of the present invention is a low speed stage (first speed).
FIG. 5 is a plan sectional view illustrating that main portions are enlarged in a state where the gear shift stage of the driving unit according to the embodiment of the present invention is a low speed stage (first speed).
FIG. 6 is a schematic side view of a low speed stage clutch and a high speed stage clutch in a state where the gear shift stage of the driving unit according to the embodiment of the present invention is a low speed stage (first speed).
FIG. 7 is a plan sectional view in a state where the gear shift stage of the driving unit according to the embodiment of the present invention is a high speed stage (second speed).
FIG. 8 is a plan sectional view illustrating that main portions are enlarged in a state where the gear shift stage of the driving unit according to the embodiment of the present invention is a high speed stage (second speed).
FIG. 9 is a schematic side view of a low speed stage clutch and a high speed stage clutch in a state where the gear shift stage of the driving unit according to the embodiment of the present invention is a high speed stage (second speed).
FIG. 10 is a perspective view of a resultant force transmitting body, the high speed stage clutch, and a gear shift stage switching body of the driving unit according to the embodiment of the present invention.
FIG. 11 is a sectional view of a gear shift stage switching mechanism in a state where the gear shift stage of the driving unit according to the embodiment of the present invention is the low speed stage (first speed).
FIG. 12 is a sectional view of the gear shift stage switching mechanism in a state where the gear shift stage of the driving unit according to the embodiment of the present invention is the low speed stage (first speed).
FIG. 13 is a sectional view of the gear shift stage switching mechanism in a state where the gear shift stage of the driving unit according to the embodiment of the present invention is between the low speed stage (first speed) and the high speed stage (second speed).
FIG. 14 is a sectional view of the gear shift stage switching mechanism in a state where the gear shift stage of the driving unit according to the embodiment of the present invention is the high speed stage (second speed).
FIG. 15 is a perspective view of the gear shift stage switching body of the driving unit according to the embodiment of the present invention.
FIG. 16 is a right side view of the gear shift stage switching body of the driving unit according to the embodiment of the present invention.
FIG. 17 is a sectional view of the gear shift stage switching body of the driving unit according to the embodiment of the present invention, and is a sectional view taken along line 17-17 of FIG. 16.
FIG. 18 is a sectional view of the gear shift stage switching body of the driving unit according to the embodiment of the present invention, and is a sectional view taken along line 18-18 of FIG. 16.
FIG. 19 is a side view of an electric switching device in which a case portion of the driving unit according to the embodiment of the present invention is illustrated by a virtual line.
FIG. 20 is a bottom view in a state where a lower case of the electric switching device of the driving unit according to the embodiment of the present invention is detached.
FIG. 21 is a plan view of the lower case of the same electric switching device of the driving unit according to the embodiment of the present invention.
FIG. 22 is a side sectional view of the lower case of the electric switching device of the driving unit according to the embodiment of the present invention.
FIG. 23 is a plan view of an upper case of the electric switching device of the driving unit according to the embodiment of the present invention.
FIG. 24 is a side sectional view of the upper case of the electric switching device of the driving unit according to the embodiment of the present invention.
FIG. 25 is a view illustrating a position of an arm portion of a driving body and a magnetic flux density sensed by a position detection sensor of the electric switching device of the driving unit according to the embodiment of the present invention.
FIG. 26 is a left side view of the driving unit provided with a wire interlocking type switching machine in the electric assist bicycle according to the embodiment of the present invention.
FIG. 27 is a sectional view of the gear shift stage switching mechanism of the driving unit provided with the wire interlocking type switching machine in a state where the gear shift stage of the driving unit according to the embodiment of the present invention is the low speed stage (first speed).
FIG. 28 is a schematic plan view of a gear shift stage detecting device and a location in the vicinity thereof in the wire interlocking type switching machine of the driving unit according to the embodiment of the present invention.
FIG. 29 is a sectional view of the gear shift stage switching mechanism in a state where the gear shift stage of the driving unit of the driving unit according to the embodiment of the present invention is between the low speed stage (first speed) and the high speed stage (second speed).
FIG. 30 is a sectional view of the gear shift stage switching mechanism of the driving unit in a state where the gear shift stage of the driving unit according to the embodiment of the present invention is the high speed stage (second speed).
FIG. 31 is a plan sectional view of a driving unit in an electric assist bicycle of the related art.

### DESCRIPTION OF EMBODIMENT

Hereinafter, an electric assist bicycle according to the embodiment of the present invention will be described based on the drawings. In addition, the leftward-and-rightward direction and the forward-and-rearward direction in the following description are referred to as the directions in a state of riding electric assist bicycle 1 in a traveling direction. In addition, the configuration of the invention is not limited to the configuration which will be described hereinafter.

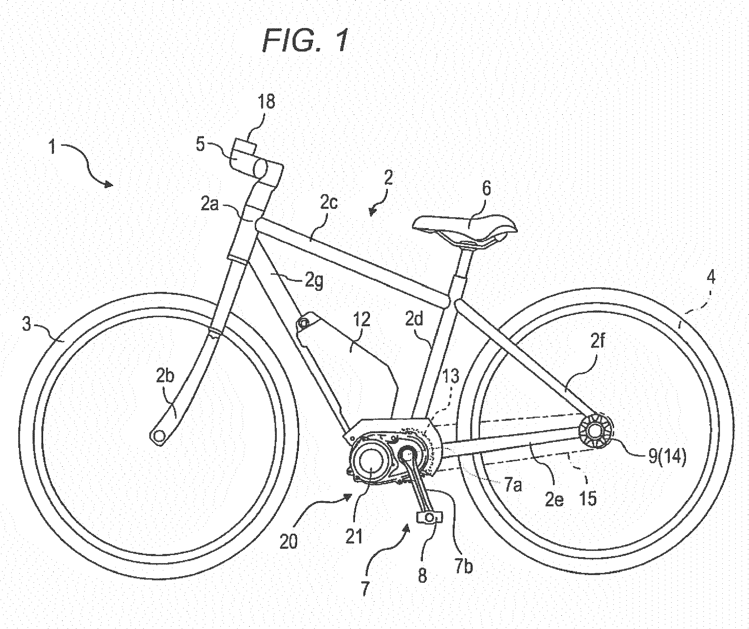

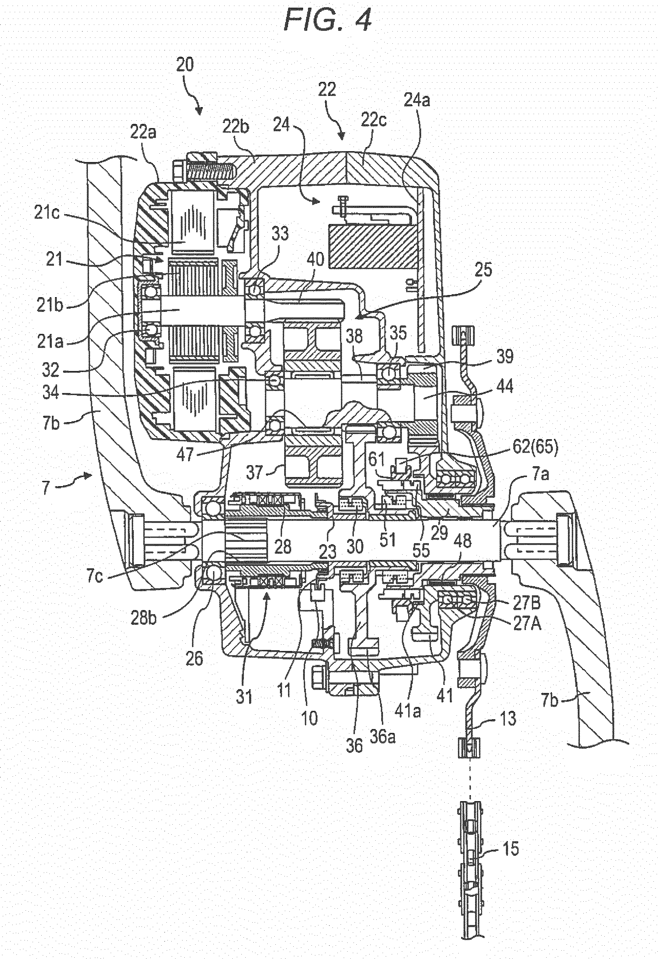

In FIG. 1, the electric assist bicycle according to the embodiment of the present invention is illustrated. As illustrated in FIG. 1, electric assist bicycle 1 includes metal frame 2 configured of head pipe 2a, front fork 2b, upper pipe 2c, lower pipe 2g, standing pipe 2d, chain stay 2e, and seat stay 2f. In addition, front wheel 3 attached to a lower end of front fork 2b to be freely rotatable, rear wheel 4 attached to a rear end of chain stay 2e to be freely rotatable, handle 5 which changes orientation of front wheel 3, saddle 6 on which a passenger is seated, and crank 7 and pedal 8 to which a human power driving force obtained by a pedaling force is applied, are provided. In addition, driving unit 20 provided with electric motor 21 (refer to FIG. 4 or the like) that is a driving source which generates an auxiliary driving force (assist force) and control portion 24 (refer to FIG. 4) which includes motor 21 and performs various electric controls; and battery 12 configured of a secondary battery that supplies driving power to motor 21, are provided. In addition, hand operating portion 18 which is attached to handle 5 or the like, can be operated by the passenger or the like, and can change the setting of speed (low speed stage (first speed) or high speed stage (second speed)) of gear shift mechanism (deceleration gear shift mechanism) 25 which will be described later in addition to the switching of a power source or a traveling mode of electric assist bicycle 1, is provided. In addition, driving sprocket (also referred to as a front sprocket, a crank sprocket, or a front gear) 13 which is a driving force output wheel body that is integrally attached to crank shaft 7a on the same shaft center, and outputs a resultant force that is a combination of the human power driving force and the auxiliary driving force, is provided. Furthermore, rear sprocket (there is a case of being referred to as a rear gear) 14 which is a rear portion wheel body that is attached to hub (also referred to as a rear hub) 9 of rear wheel 4, and chain 15 which is an endless driving force transmitting body that is wound endlessly in a state of being rotatable across driving sprocket 13 and rear sprocket 14, are provided. In addition, electric assist bicycle 1 can travel by adding the auxiliary driving force generated by motor 21 to the human power driving force generated by the pedaling force from pedal 8, and the resultant force obtained by adding the auxiliary driving force to the human power driving force is transmitted to rear wheel 4 via chain 15 and rear sprocket 14 from driving sprocket 13.

In addition, battery 12 is an example of a condenser, a secondary battery is appropriate, but another example of the condenser may be a capacitor. In addition, crank 7 is configured of crank arms 7b which are respectively provided on the left and on the right, and crank shaft 7a which links left and right crank arms 7b, and pedals 8 are attached to end portions of the left and right crank arms 7b to be freely rotatable.

As illustrated in FIG. 1, in electric assist bicycle 1, driving unit 20 is installed at an intermediate position between front wheel 3 and rear wheel 4, and more specifically, at a location at which crank shaft 7a penetrates. In addition, by configuring the disposition, driving unit 20 of which a weight is relatively large is disposed at the center in the forward-and-rearward direction of electric assist bicycle 1, and thus, front wheel 3 or rear wheel 4 is likely to be lifted up, handling of a vehicle body (frame 2 or the like) of electric assist bicycle 1 is excellent, for example, it is possible to easily climb over even when there is a step on the traveling road surface, and the traveling stability is also excellent.

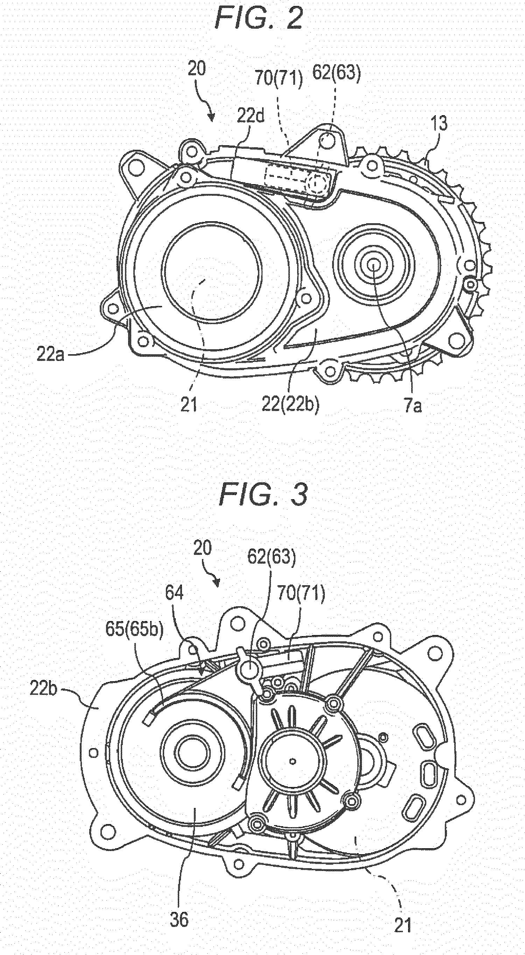

As illustrated in FIGS. 2 to 4, an outer shell portion of driving unit 20 is configured of unit case 22 configured of motor case 22a, left case 22b, right case 22c, and switching portion cover 22d, crank shaft 7a penetrates driving unit 20 (a rear portion of driving unit 20 in the embodiment) from the side to the side. In addition, at an outer circumference of crank shaft 7a, substantially tube-like human power transmitting body 28 to which the human power driving force from crank shaft 7a is transmitted, interlocking tube body 23 to which the human power driving force from human power transmitting body 28 is transmitted, are installed. Furthermore, the human power driving force from interlocking tube body 23 is transmitted via one-way clutch (one-way clutch for disconnecting the auxiliary driving force) 30 or the like, resultant force transmitting body 29 which transmits the resultant force that is a combination of the human power driving force and the auxiliary driving force from motor 21 to driving sprocket 13, is installed.

As illustrated in FIG. 4 or the like, in unit case 22 of driving unit 20, deceleration mechanism 25 which decelerates and transmits rotation of motor 21 to resultant force transmitting body 29 side (intermediate shaft 44 in the embodiment), and gear shift mechanism 17 which changes and transmits a rotation speed to resultant force transmitting body 29 in accordance with a plurality of gear shift stages, are installed. In addition, in unit case 22 of driving unit 20, motor 21 is installed, and control board 24a on which an electronic component which performs various electric controls is provided, or control portion 24 including storage portion of various pieces of information, is also installed. In addition, as illustrated in FIG. 4 or the like, the shaft center of front surface 21a of motor 21 and the shaft center of crank shaft 7a are different from each other.

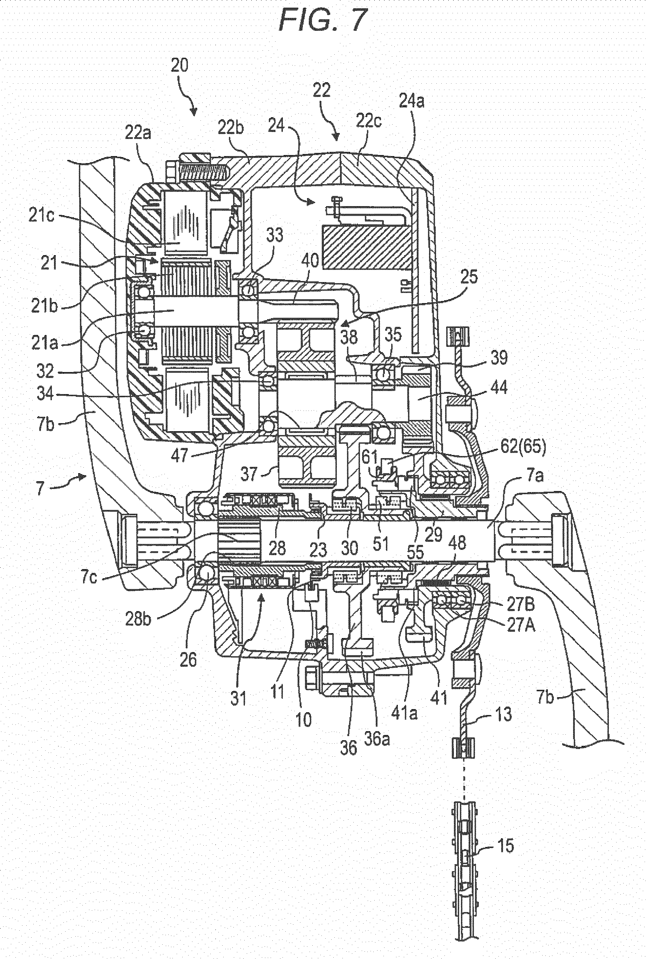

Driving unit 20 will be described in more detail. As illustrated in FIGS. 4, 5, 7, and 8, crank shaft 7a is installed to be freely rotatable by bearings 26, 27A, and 27B in a state where the rear portion of driving unit 20 penetrates from the side to the side, and at the outer circumference of the part near the left side in crank shaft 7a, tube-like human power transmitting body 28 is fitted in a state of rotating integrally with crank shaft 7a via serration portion (or spline portion) 7c. In addition, serration portion (or spline portion) 28b is formed at a location which corresponds to serration portion (or spline portion) 7c of crank shaft 7a at an inner circumference of human power transmitting body 28, and is meshed with serration portion (spline portion) 7c of crank shaft 7a.

On the outer circumferential surface of human power transmitting body 28, magnetic strain generation portion 31b which imparts magnetic anisotropy is formed, coil 31a is installed via a constant void (space) at the outer circumference, and magnetic strain type torque sensor (human power detection portion) 31 is configured of magnetic strain generation portion 31b and coil 31a. Accordingly, the human power driving force from crank shaft 7a is transmitted to human power transmitting body 28, and the human power driving force is detected by torque sensor 31. In addition, in magnetic strain torque sensor 31, magnetic strain generation portion 31b is formed in a spiral shape which makes, for example, +45 degrees and -45 degrees, with respect to the shaft center direction of human power transmitting body 28. In addition, when the human power driving force is transmitted to human power transmitting body 28, strain is generated in magnetic strain generation portion 31b of the surface of human power transmitting body 28, a part at which magnetic permeability increases and a part at which magnetic permeability decreases are generated, and thus, the size of torque (human power driving force) can be detected by measuring inductance difference of coil 31a.

Interlocking tube body 23 is installed in a state of being freely rotatable with respect to crank shaft 7a at a location adjacent to right side of human power transmitting body 28 at the outer circumference of crank shaft 7a, but serration portion (or spline portion) 28a formed at the outer circumference of a right end portion of human power transmitting body 28, and serration portion (or spline portion) 23a formed at the inner circumference of a left end portion of interlocking tube body 23 are fitted to each other, and rotate integrally with human power transmitting body 28. In addition, in the embodiment, serration portion (or spline portion) 23a formed at the inner circumference of the left end portion of interlocking tube body 23 is fitted to serration portion (or splined portion) 28a of human power transmitting body 28 from the outer side.

In the embodiment, rotation detecting body 11 for detecting a state where interlocking tube body 23 rotates is attached to the outer circumference of the left part of interlocking tube body 23. In addition, rotation detector 10 is fixed to be attached to unit case 22 side to nip rotation detecting body 11 from the left and the right with a fine void. For example, in rotation detectors 10, two optical sensors in which an emitting portion and a light receiving portion make a pair are configured to be aligned in the rotation direction of rotation detecting body 11, and rotation detecting body 11 has multiple tooth portions (light blocking portion) which extend in the outer circumferential direction in a shape of a sinking comb. In addition, as the tooth portions of rotation detecting body 11 passes through between the emitting portion and the light receiving portion of rotation detector 10, a light incident state and light blocking state are electrically sensed by rotation detector 10, and in control portion 24 which inputs the signal, a rotation amount and a rotation direction of interlocking tube body 23 are detected. In addition, a magnetic sensor may be provided instead of the optical sensor, and the rotation amount and the rotation direction of interlocking tube body 23 may be sensed. Here, since interlocking tube body 23 rotates integrally with human power transmitting body 28 and human power transmitting body 28 rotates integrally with crank shaft 7a, by sensing the rotation amount and the rotation direction of interlocking tube body 23, the rotation amount or the rotation direction of crank shaft 7a or pedal 8 can also be sensed.

As illustrated in FIGS. 4 to 9, on the right side and on the outer circumferential side of interlocking tube body 23, gear shift mechanism 17 which includes a plurality of selectable gear shift stages having different gear ratios and transmits the driving force to resultant force transmitting body 29 is installed via one-way clutch (one-way clutch for disconnecting the auxiliary driving force) 30. Gear shift mechanism 17 includes low speed stage transmission gear 36 and high speed stage transmission gear 41, high speed stage clutch 55 which can transmit the driving force of high speed stage transmission gear 41 to resultant force transmitting body 29, gear shift stage switching body 61 which is freely engaged with and disengaged from high speed stage clutch 55 and is moved in accordance with the selected gear shift stage, and low speed stage clutch 51 which can transmit the driving force of low speed stage transmission gear 36 to resultant force transmitting body 29. In addition, in a case of stepping on pedal 8 and advancing, the human power driving force transmitted to interlocking tube body 23 is transmitted to low speed stage transmission gear 36 of gear shift mechanism 17.

Low speed stage transmission gear 36 includes tooth portion 36a which has a diameter greater than that of high speed stage transmission gear 41 and is formed in the outer circumferential portion having a large diameter, and small-diameter cylindrical portion 36b which is formed in the inner circumferential portion and protrudes to the right side. In addition, low speed stage transmission gear 36 is installed to be freely rotatable at the outer circumference of crank shaft 7a via rotating tube 42. In addition, low speed stage transmission gear 36 and interlocking tube body 23 can be interlocked with each other via one-way clutch (one-way clutch for disconnecting the auxiliary driving force) 30, and one-way clutch 30 connects and separates low speed stage transmission gear 36 and interlocking tube body 23 to and from each other in the circumferential direction.

As illustrated in FIGS. 4 to 10, resultant force transmitting body 29 is a cylindrical member which is externally fitted to crank shaft 7a to be freely rotatable, and includes medium-diameter tube-like portion 29a formed on the left side, small-diameter tube-like portion 29b formed on the right side, and tooth portion 29d formed at the inner circumference of medium-diameter tube-like portion 29a. In addition, accommodation concave portions 29c which are provided for each predetermined angle in the circumferential direction in medium-diameter tube-like portion 29a, and in which engaging member 56 (also referred to as a ratchet claw or a cam) of high speed stage clutch 55 which will be described later is accommodated in an uprisable and tiltable state, and biasing spring accommodation groove portion 29f in which biasing spring 57 configured of a spring of high speed stage clutch 55 which will be described later is accommodated in a contracting state, are provided. Furthermore, regulation spring accommodation groove portion 29g which accommodates a regulation spring that regulates the movement to the left side of engaging member 56 of high speed stage clutch 55 therein, and serration portion (or spline portion) 29h which is formed on the outer circumferential surface of the right-side tube-like portion having a small diameter, and on which driving sprocket 13 is mounted, are provided. In addition, resultant force transmitting body 29 is installed in a state of freely rotating coaxially to the outer circumference of crank shaft 7a. In addition, the right end portion of small-diameter tube-like portion 29b of resultant force transmitting body 29 further protrudes to the outer side than unit case 22, driving sprocket 13 is externally fitted to the protruding part of small-diameter tube-like portion 29b, and resultant force transmitting body 29 and driving sprocket 13 integrally rotate.

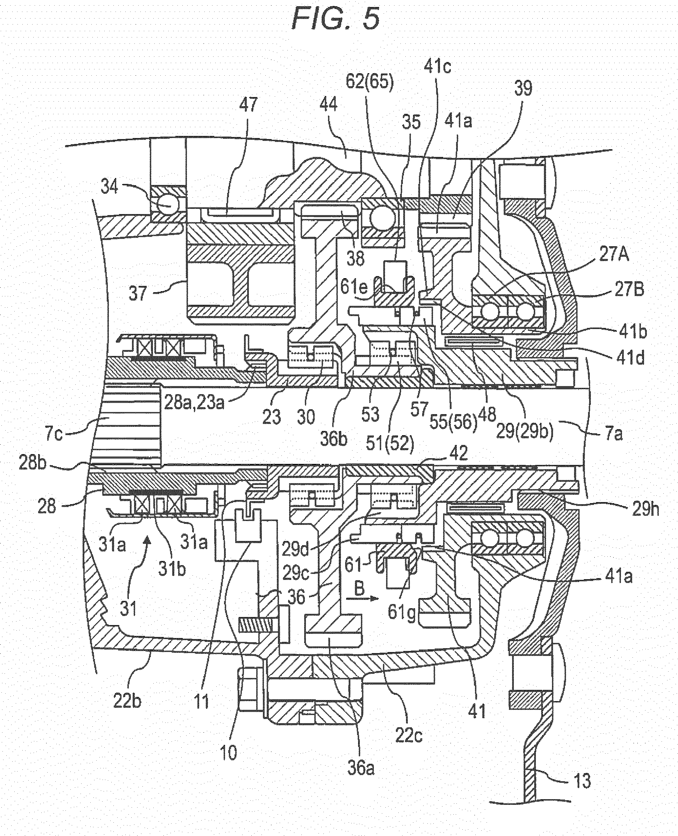

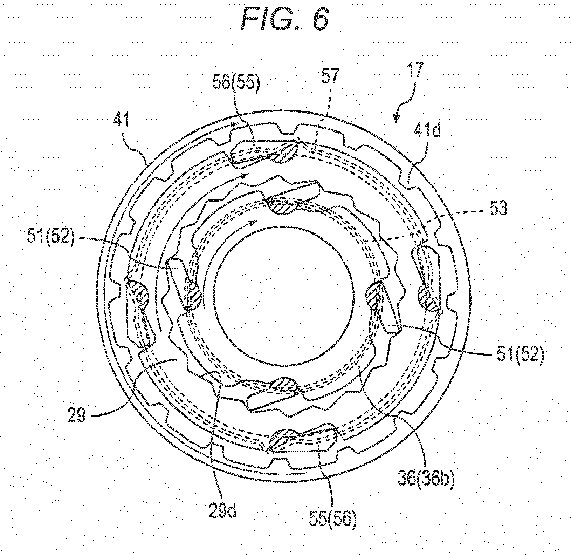

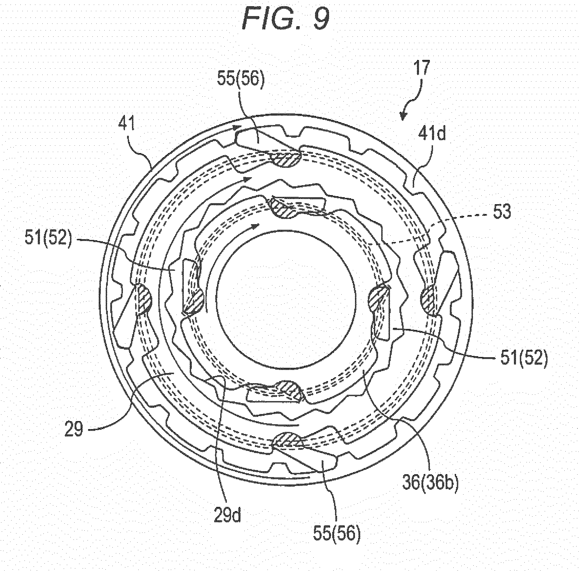

As illustrated in FIGS. 4 to 9, cylindrical portion 36b of low speed stage transmission gear 36 is inserted into medium-diameter tube-like portion 29a of resultant force transmitting body 29, and low speed stage clutch (low speed stage one-way clutch) 51 configured of the one-way clutch is provided at the outer circumference of cylindrical portion 36b of low speed stage transmission gear 36. As illustrated in FIGS. 5, 6, 8, and 9, low speed stage clutch 51 includes plurality of engaging members 52 configured of a clutch claw (cam) that freely rises and falls in the radial direction, and biasing spring 53 configured of a circular spring which biases to the radially outer side such that engaging member 52 rises. Engaging member 52 of low speed stage clutch 51 is freely engaged to and disengaged from tooth portion 29d of resultant force transmitting body 29, and as illustrated in FIG. 6, in a case where engaging member 52 is switched to a rising posture, and engaging member 52 is engaged with tooth portion 29d of resultant force transmitting body 29, and as illustrated in FIG. 9, in a case where engaging member 52 is switched to a tilted posture, engaging member 52 is separated from tooth portion 29d of resultant force transmitting body 29.

As illustrated in FIGS. 4 to 9, high speed stage transmission gear 41 is externally fitted to small-diameter tube-like portion 29b of resultant force transmitting body 29 to be freely rotatable via bearing 48. High speed stage transmission gear 41 includes tooth portion 41a formed in the outer circumferential portion having a large diameter, small-diameter cylindrical portion 41b which is formed in the inner circumferential portion having a small diameter and protrudes to the right side, medium-diameter cylindrical portion 41c which is formed between tooth portion 41a and small-diameter cylindrical portion 41b and protrudes to the left side, and tooth portion 41d which is formed at the outer circumference of medium-diameter cylindrical portion 41c. In addition, a diameter of tooth portion 41a of high speed stage transmission gear 41 is smaller than a diameter of tooth portion 36a of low speed stage transmission gear 36.

As illustrated in FIGS. 5, 6, and 8 to 10, high speed stage clutch 55 configured of the one-way clutch is provided on the outer circumferential side of medium-diameter tube-like portion 29a of resultant force transmitting body 29. High speed stage clutch 55 includes plurality of engaging members 56 configured of a ratchet clutch (cam) which freely rises and is tilted in the radial direction, and biasing spring 57 configured of a circular spring which biases to the radially outer side such that engaging member 56 rises. Engaging member 56 of high speed stage clutch 55 is freely engaged to and disengaged from tooth portion 41d of high speed stage transmission gear 41, as illustrated in FIG. 9, in a case where engaging member 56 is switched to a rising posture, engaging member 56 is engaged with tooth portion 41d of high speed stage transmission gear 41, and as illustrated in FIG. 6, in a case where engaging member 56 is switched to the tilted posture, engaging member 56 is disengaged from tooth portion 41d of high speed stage transmission gear 41. In addition, engaging member 56 is freely engaged to and disengaged from gear shift stage switching body 61 which will be described later.

In this manner, in the embodiment, gear shift mechanism 17 including high speed stage clutch 55 or low speed stage clutch 51 is installed between torque sensor 31 (magnetic strain generation portion 31b of torque sensor 31) or rotation detecting body 11 and driving sprocket 13 which is a driving force output wheel body, with respect to shaft center direction of crank shaft 7a. Using the shaft center of crank shaft 7a as the center, high speed stage clutch 55 is installed on the outer side of low speed stage clutch 51.

As illustrated in FIGS. 4, 5, 7, and 8, the left end portion of crank shaft 7a is supported by unit case 22 (specifically, left case 22b) to be freely rotatable via one bearing 26, small-diameter cylindrical portion 41b of high speed stage transmission gear 41 is supported by unit case 22 (specifically, right case 22c) to be freely rotatable via other two bearings 27A and 27B together with the right end portion of crank shaft 7a and resultant force transmitting body 29.

Motor 21 includes stator portion 21c, rotor portion 21b supported by motor bearings 32 and 33 to be freely rotatable, and motor rotation shaft 21a which is freely rotatable integrally with rotor portion 21b. Motor rotation shaft 21a of motor 21 protrudes to the right side, and motor shaft deceleration gear 40 of deceleration mechanism 25 is formed at the outer circumference of the protruding shaft portion.

Deceleration mechanism 25 includes intermediate shaft 44 provided in parallel between crank shaft 7a and motor rotation shaft 21a, first deceleration gear 37, second deceleration gear 38, and third deceleration gear 39 which are provided in intermediate shaft 44, and one-way clutch 47 for disconnecting the human power driving force. Intermediate shaft 44 is installed to be freely rotatable in unit case 22 via one pair of bearings 34 and 35. The diameter of first deceleration gear 37 is greater than the diameters of second deceleration gear 38 and third deceleration gear 39, the diameter of second deceleration gear 38 is smaller than the diameters of first deceleration gear 37 and third deceleration gear 39, and the diameter of third deceleration gear 39 is greater than the diameter of second deceleration gear 38 and smaller than the diameter of first deceleration gear 37.

First deceleration gear 37 is meshed with motor shaft deceleration gear 40, second deceleration gear 38 is meshed with low speed stage transmission gear 36, and third deceleration gear 39 is meshed with high speed stage transmission gear 41. Accordingly, low speed stage transmission gear 36 and high speed stage transmission gear 41 are interlocked with motor 21 via deceleration mechanism 25. In addition, one-way clutch 47 is installed between the outer circumference of intermediate shaft 44 and the inner circumference of first deceleration gear 37, and disconnects the human power driving force. In other words, by one-way clutch 47, in a case where motor 21 is not driven and the auxiliary driving force is not generated, rotor portion 21b of motor 21 may not rotate by the force from pedal 8. In a case where intermediate shaft 44 and first deceleration gear 37 are connected to each other via one-way clutch 47, first deceleration gear 37, second deceleration gear 38, and third deceleration gear 39 rotate in one direction integrally with intermediate shaft 44.

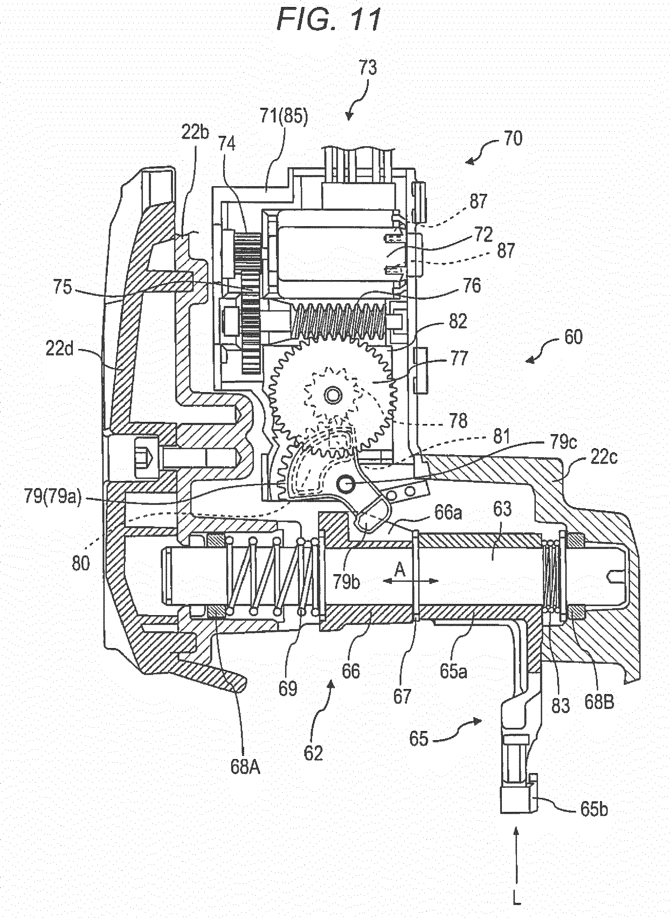

Gear shift mechanism 17 includes a low speed stage (an example of a gear shift stage at a so-called first speed) and a high speed stage (an example of a gear shift stage at a so-called second speed) which are selectable and have different gear ratios. In a case where the low speed stage is selected, the rotation of low speed stage transmission gear 36 is transmitted to resultant force transmitting body 29, and in a case where high speed stage is selected, the rotation of high speed stage transmission gear 41 is transmitted to resultant force transmitting body 29. In addition, in gear shift mechanism 17, gear shift stage switching mechanism 60 (refer to FIGS. 11 to 14) which switches the gear shift stage is provided.

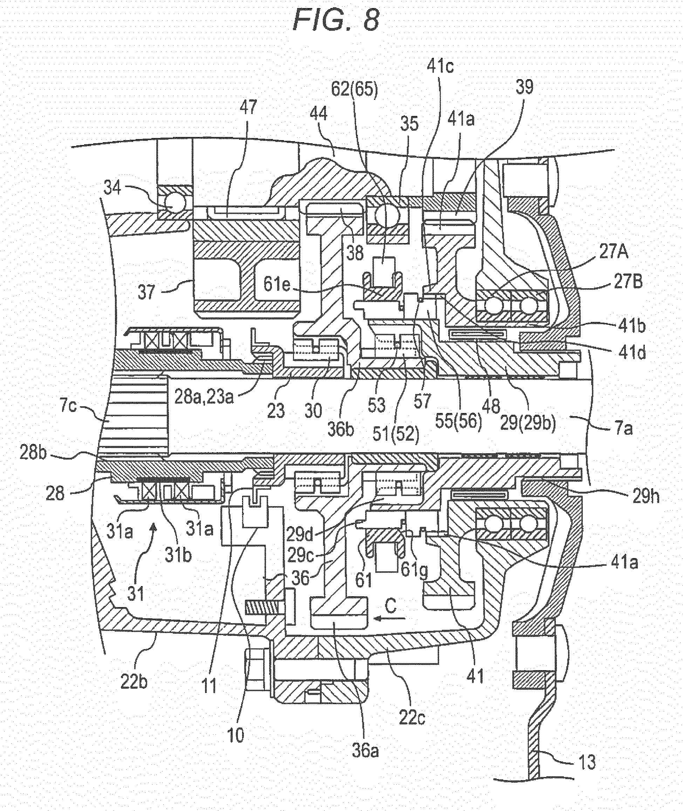

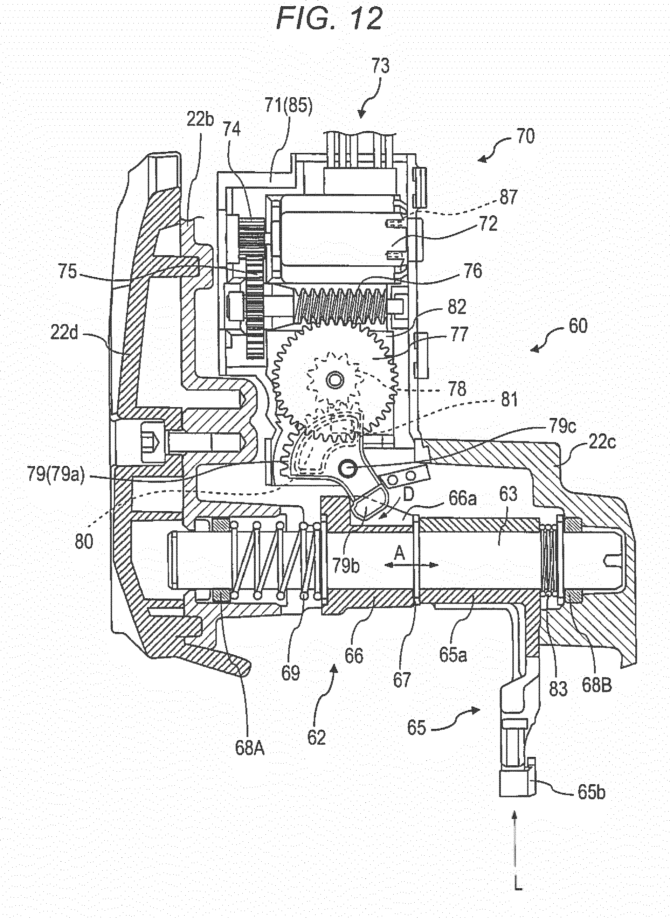

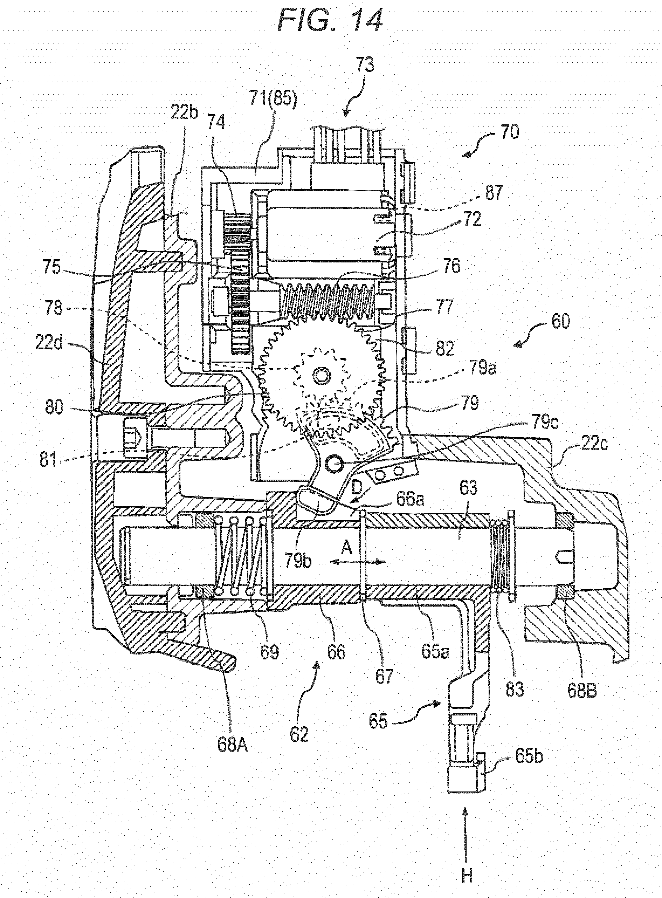

Gear shift stage switching mechanism 60 includes gear shift stage switching body 61 which is illustrated in FIGS. 5 and 8 and switches the gear shift stage by switching the posture of engaging member 56 of high speed stage clutch 55. In addition, switching body moving portion 62 which is illustrated in FIGS. 3, 5, 8, and 11 to 14, and made of a fork including semi-circular arc-shaped fork body 65 or the like to be freely movable at low speed stage switching position L (refer to FIGS. 11 and 12) and at high speed stage switching position H (refer to FIG. 14) along switching shaft 63 supported in parallel with crank shaft 7a in driving unit 20, is provided.

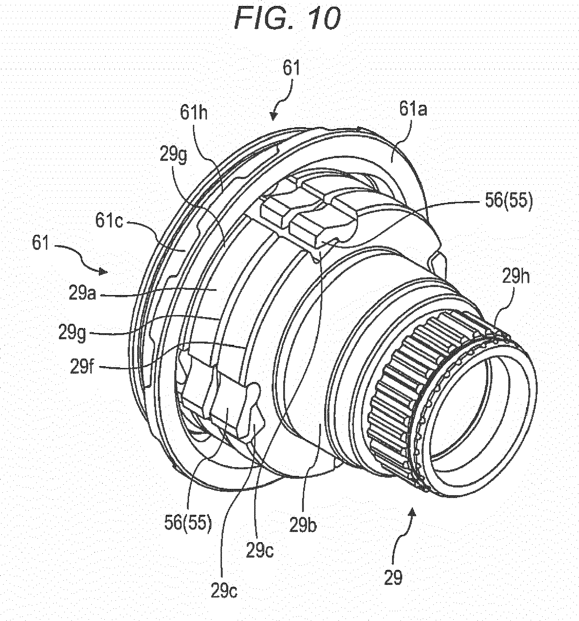

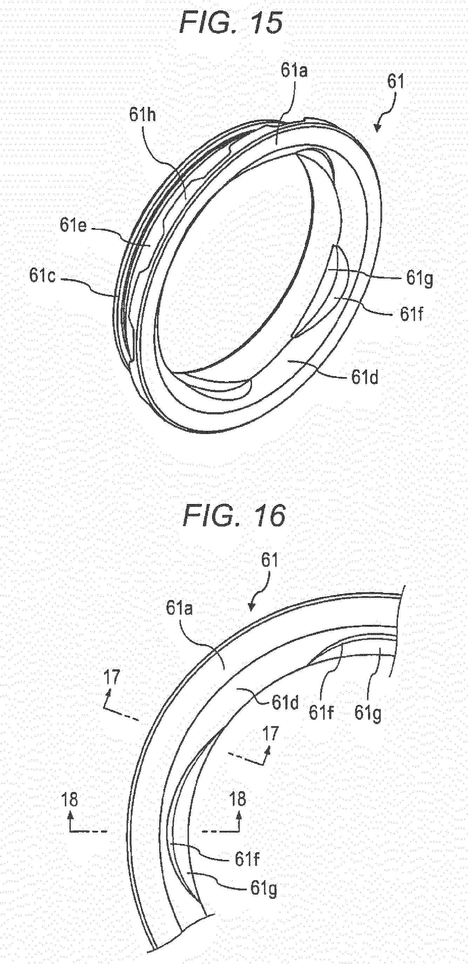

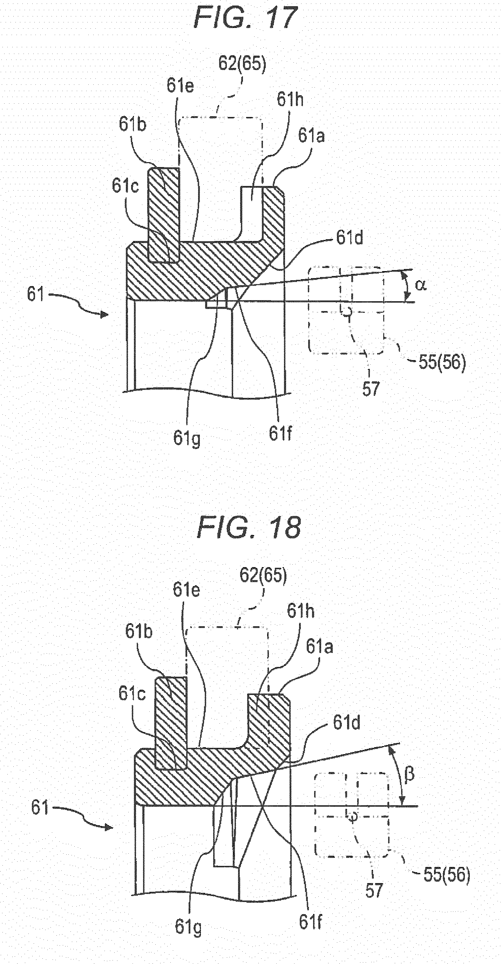

As illustrated in FIGS. 15 and 16, gear shift stage switching body 61 is a circular member, and slidably abuts against the outer circumferential surface (refer to FIG. 10) of medium-diameter tube-like portion 29a of resultant force transmitting body 29, is freely rotatable using the shaft center of crank shaft 7a as the center, and is externally fitted in a state of being freely movable (freely slidable) in the shaft center direction of crank shaft 7a. Flange portion 61a which extends in a shape of a flange to the outer circumferential side is integrally formed on the right side surface of gear shift stage switching body 61, and at the part near the left side at the outer circumference of gear shift stage switching body 61, mounting groove 61c on which C-shaped attaching ring 61b is mounted is formed. In addition, at the outer circumference (specifically, sectional concave part 61e on the left side of flange portion 61a of gear shift stage switching body 61) of gear shift stage switching body 61, in a state where fork body 65 of switching body moving portion 62 is assembled, attaching ring 61b (refer to FIGS. 17 and 18) is mounted. In addition, on the right side surface of fork body 65 of switching body moving portion 62 and on the left side surface of flange portion 61a of opposing gear shift stage switching body 61, concave and convex portions 61h meshed with each other are formed, and accordingly, gear shift stage switching body 61 is regulated not to rotate in the circumferential direction.

Here, in gear shift stage switching body 61, when allowing gear shift stage switching body 61 to abut against high speed stage clutch 55, a force imparting mechanism which imparts a force to high speed stage clutch 55 from gear shift stage switching body 61 is provided such that engaging member 56 of high speed stage clutch 55 is in a disconnected posture from a connected posture with respect to resultant force transmitting body 29. As an example of the force imparting mechanism, chamfered shape portion 61d (refer to FIGS 15 to 18) which widens while being inclined to the radially outer side as approaching the end surface is formed at the inner circumference of the right side portion of gear shift stage switching body 61. Chamfered shape portion 61d abuts against engaging member 56 of high speed stage clutch 55 from the left side as gear shift stage switching body 61 moves in the rightward direction along the shaft center direction of crank shaft 7a and imparts a load such that engaging member 56 is inclined.

In addition, as another force imparting mechanism, plurality (four in the embodiment) of cam surfaces 61f are formed at each predetermined angle (90 degrees in the embodiment) in the circumferential direction when viewed from the side surface such that a part of chamfered shape portion 61d of gear shift stage switching body 61 is hollowed in a shape of an elliptic arc on the outer circumferential side. While electric assist bicycle 1 travels, when engaging member 56 of high speed stage clutch 55 revolves around the shaft center the same as crank shaft 7a together with resultant force transmitting body 29, cam surface 61f of gear shift stage switching body 61 imparts a load to guide engaging member 56 to the tilted posture as being engaged with engaging member 56 and being gradually pressed to the inner diameter side.

However, as illustrated in FIGS. 17 and 18, cam surface 61f of gear shift stage switching body 61 is formed to be inclined to slightly widen approaching a near side of a location at which engaging member 56 enters to freely retreat along the shaft center direction of crank shaft 7a (inclination angle α in section taken along line 17-17 of FIG. 16 illustrated in FIG. 17 and inclination angle β in section taken along line 18-18 of FIG. 16 in FIG. 18). Accordingly, in a case where engaging member 56 is meshed with tooth portion 41d of high speed stage transmission gear 41 by a large force that is equal to or greater than a predetermined value, engaging member 56 is configured to move to the right side along the inclination of cam surface 61f and to be disengageable from cam surface 61f. Furthermore, as illustrated in FIGS. 17 and 18, the inclination angle in a case of cutting cam surface 61f in the radial direction is formed to gradually become smaller as engaging member 56 revolves and proceeds in the circumferential direction (that is, inclination angle β > inclination angle α). In addition, the inclination angles α and β with respect to the crank shaft center direction of cam surface 61f is preferably equal to or less than 25 degrees.

In addition, in a state where electric assist bicycle 1 is stopped, when gear shift stage switching body 61 moves to the right side, even in a case where engaging member 56 is fitted to cam surface 61f of gear shift stage switching body 61, chamfered shape portion 61g is formed on a far side (left side) in the shaft center direction of crank shaft 7a at a location at which cam surface 61f is formed in gear shift stage switching body 61 such that engaging member 56 can be inclined.

By the force imparting mechanisms, the high speed stage is switched to the low speed stage, and when gear shift stage switching body 61 abuts against high speed stage clutch 55, as long as engaging member 56 of high speed stage clutch 55 is not meshed with tooth portion 41d of high speed stage transmission gear 41 by a large force that is equal to or greater than a predetermined value, engaging member 56 of high speed stage clutch 55 is tilted by gear shift stage switching body 61, high speed stage clutch 55 is excellently disconnected, and the gear is shifted. In addition, in a case where the force by which engaging member 56 of high speed stage clutch 55 is meshed with tooth portion 41d of high speed stage transmission gear 41 is equal to or greater than a predetermined value, damage of gear shift stage switching body 61 or high speed stage clutch 55 due to the force that is forcibly applied to gear shift stage switching body 61 is prevented.

As illustrated in FIGS. 5, 8, and 11 to 14, switching body moving portion 62 of gear shift stage switching mechanism 60 is a member that moves gear shift stage switching body 61, and includes switching shaft 63, fork body 65, interlocking tube 66, and retaining ring 67. Switching shaft 63 is supported by one pair of supporting portions 68A and 68B which are provided in unit case 22 (left case 22b and right case 22c), is installed to be parallel to crank shaft 7a, and freely moves in a shaft center direction A. In addition, 22d in FIGS. 3, and 11 to 14 is a switching portion cover that covers one end portion or the like of switching shaft 63.

Fork body 65 includes tube-like portion 65a and C-shaped fork portion 65b linked to tube-like portion 65a. As illustrated in FIGS. 11 to 14 and described above, fork portion 65b is fitted to sectional concave part 61e of gear shift stage switching body 61 from the outer circumferential side. Retaining ring 67 is externally fitted to switching shaft 63, and is positioned between tube-like portion 65a of fork body 65 and interlocking tube 66. Switching shaft 63 communicates with tube-like portion 65a of fork body 65 and interlocking tube 66, and fork body 65 and interlocking tube 66 freely moves in the shaft center direction A together with switching shaft 63. In addition, switching body moving portion 62 is biased to move in the direction of low speed stage switching position L from high speed stage switching position H by coil-like spring 69 that is biasing mechanism. In addition, switching body moving portion 62 is configured such that fork body 65 interlocks with interlocking tube 66 by spring 83 having a biasing force smaller than that of spring 69, but spring 83 has only an extremely small biasing force.

Furthermore, in the embodiment, as illustrated in FIGS. 2, 3, 11 to 14, 19, and 20, electric switching device 70 which is an example of a switching body moving mechanism that moves (or moves gear shift stage switching body 61 to low speed stage switching position L or high speed stage switching position H) switching body moving portion 62 (interlocking tube 66 or the like) to low speed stage switching position L or high speed stage switching position H, is provided. Electric switching device 70 includes case portion 71 which can be divided into two, board 82, small gear shift stage switching motor (also referred to as a switching motor) 72 loaded on board 82, connector portion 73 which is connected to gear shift stage switching motor 72 or the like, and small-diameter motor deceleration gear 74 which is attached to the rotation shaft of gear shift stage switching motor 72. In addition, large-diameter first deceleration gear 75 which is meshed with motor deceleration gear 74, cylindrical worm 76 (one type of gear) which rotates integrally with first deceleration gear 75, and large-diameter worm wheel 77 (one type of gear) which is meshed with cylindrical worm 76, are provided. Furthermore, small-diameter second deceleration gear 78 which integrally rotates with worm wheel 77; and driving body 79 in which arm portion 79b that is meshed with second deceleration gear 78 by arc-like tooth portion 79a and engaged with interlocking tube 66 is provided, are provided. Driving body 79 freely rotates around supporting shaft 79c, and arm portion 79b is inserted into concave portion 66a formed ininterlocking tube 66. In addition, as gear shift stage switching motor 72 is driven, the rotation driving force of gear shift stage switching motor 72 is transmitted to driving body 79 while being decelerated via deceleration gears 74, 75, and 78 or cylindrical worm 76, and worm wheel 77, and arm portion 79b of driving body 79 is driven. Accordingly, switching body moving portion 62 and fork body 65 can be driven against a biasing force of spring 69 via interlocking tube 66.

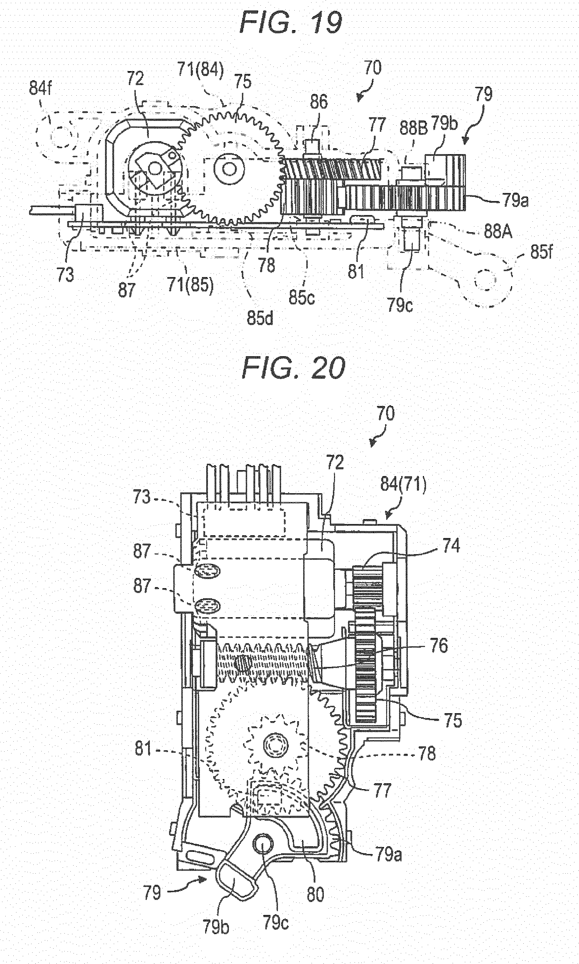

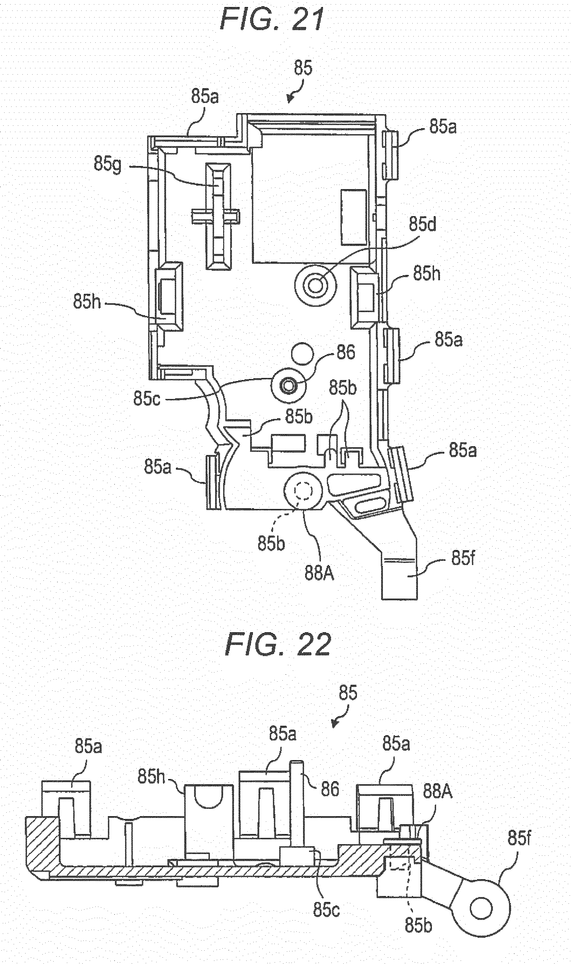

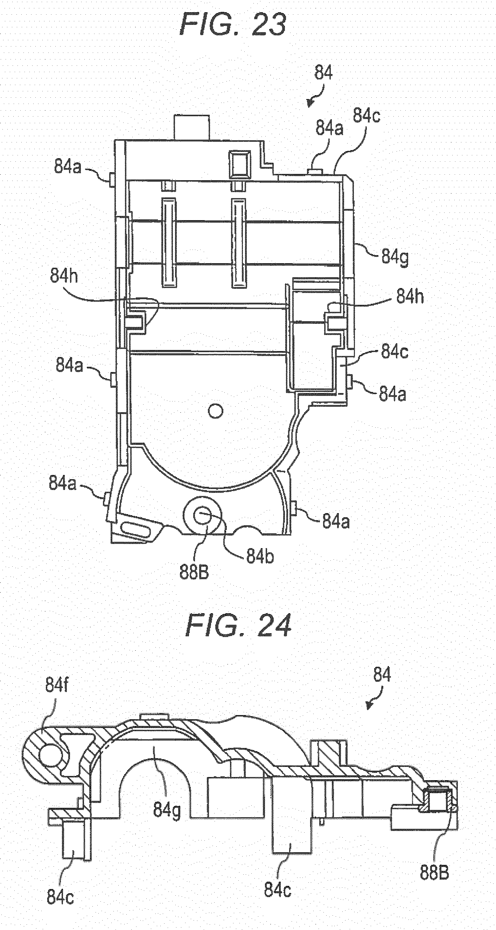

In the embodiment, as illustrated FIGS. 19 to 24, case portion 71 is made of upper case 84 and lower case 85 which are divided into upper and lower parts, plurality of claw portions 85a formed in lower case 85 are freely engaged to and disengaged from plurality of locking protruding portions 84a formed in upper case 84. In addition, one pair of gear shift stage switching motor connection terminal (also referred to as motor connection terminal) 87 which is freely attached to and detached from gear shift stage switching motor 72 is directly attached to board 82 in a standing posture, and motor connection terminals 87 are configured to be electrified to gear shift stage switching motor 72 by passing through a hole portion formed in a motor main body and mounting gear shift stage switching motor 72 in a state of protruding to the inside.

In addition, in one end portion of case portion 71 (upper case 84 and lower case 85), hole portions 84b and 85b to which supporting tubes 88A and 88B which support the shaft portion of driving body 79 are fitted, are formed. Additionally, fixing arms 84f and 85f into which a screw or the like is inserted for fixing case portion 71 at a predetermined position in the unit case, receiving portions 84g and 85g which receive the rotation shaft side of a main body portion of gear shift stage switching motor 72, and bearing portions 84h and 85h which hold the shaft portions of cylindrical worm 76 and deceleration gear 75 from above and below, are formed. Furthermore, in lower case 85, plurality of locking claws 85b which perform regulation not to move vertically by inserting one end portion of board 82 from the horizontal direction, are formed. In addition, in lower case 85, supporting shaft 86 which supports worm wheel 77 to be freely rotatable is fixed in a standing posture, and at a part at which supporting shaft 86 is attached, cylindrical base 85c which can load worm wheel 77 to be freely rotatable is integrally formed. In addition, cylindrical protruding portion 85d for position regulation on which the board is loaded is integrally formed in lower case 85, and pressing rib 84c or the like which presses board 82 to a predetermined position of a bottom portion in case portion 71 is integrally formed in upper case 84.

In addition, as illustrated in FIG. 19, at the outer circumference of worm wheel 77, the tooth portion which is meshed with cylindrical worm 76 (refer to FIG. 20) is formed, and the tooth portion is formed to be slightly inclined when viewed from the side surface to be meshed with cylindrical worm 76 (in FIG. 19, the inclination is illustrated being exaggerated). In addition, when the load acts on the electric switching machine (when moving from the low speed stage to the high speed stage side in the embodiment), the thrust reaction force from cylindrical worm 76 is configured to act on one case (lower case 85 in the embodiment).

In other words, in the embodiment, when rotating gear shift stage switching motor 72 in the predetermined direction to move from low speed stage switching position L to high speed stage switching position H, switching body moving portion 62 including interlocking tube 66 or the like should move against the biasing force of spring 69, and thus, the load of electric switching device 70 including gear shift stage switching motor 72 increases. In addition, while force transmission efficiency between so-called spur gears is high, a deceleration ratio (torque increase ratio) of cylindrical worm 76 and worm wheel 77 is high, but the force transmission efficiency is 50% of the strength and is relatively low, and thus, when the position at which cylindrical worm 76 and worm wheel 77 are meshed with each other is shifted, the force transmission efficiency more substantially deteriorates. Therefore, it is desirable that the position at which cylindrical worm 76 and worm wheel 77 are meshed with each other is set to be excellent. However, regarding the assembly position of worm wheel 77, the locking position is not necessarily accurate due to manufacturing error caused by case portion 71 (upper case 84 and lower case 85). In order to handle the situation, in the embodiment, the installation is performed such that the direction inclined slightly and diagonally downward is not achieved at a contact location with cylindrical worm 76 in worm wheel 77. Accordingly, when rotating gear shift stage switching motor 72 to achieve the high speed stage side on which the load increases, the thrust reaction force from cylindrical worm 76 is configured to act on lower case 85. As a result, when a large load acts, a position at which cylindrical worm 76 and worm wheel 77 are meshed with each other becomes the most appropriate, and even in a case of using small gear shift stage switching motor 72, it is possible to excellently drive driving body 79.

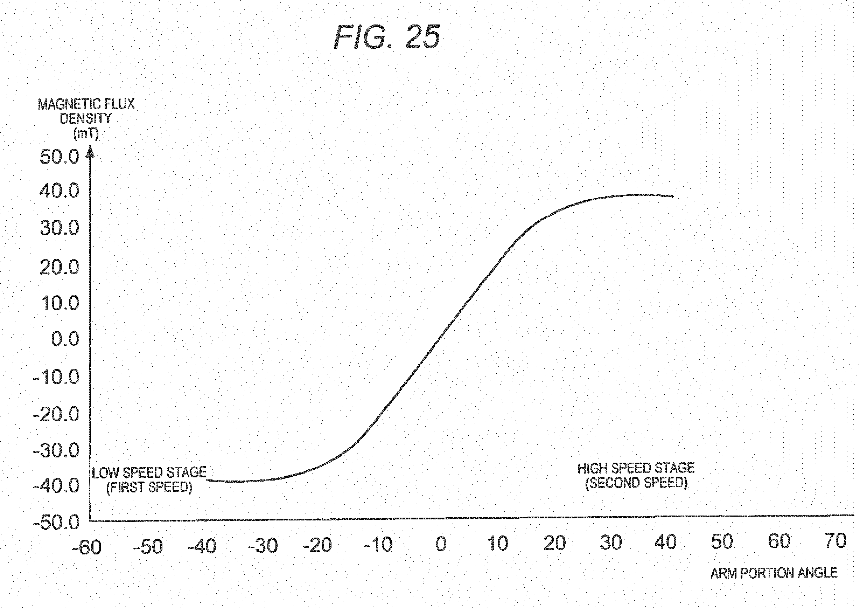

In addition, as illustrated in FIGS. 11 to 14 and 20, fan-shaped magnet 80 is attached to driving body 79, and when driving body 79 is at a predetermined gear shift stage position (low speed stage), position sensing sensor 81 configured of linear hole elements (linear hole IC) for detecting the position of driving body 79 is attached onto board 82 at a position near magnet 80. Magnet 80 has a shape of a fan using supporting shaft 79c of driving body 79 as the center, and a magnet of which one circumferential end side of the arc is an N pole and the other circumferential side is an S pole is used. As illustrated in FIG. 25, position sensing sensor 81 can detect that the position (in the embodiment, the low speed stage, the high speed stage, and an intermediate position therebetween) of driving body 79 is in a linear state, that is, detect the position in a shape of a straight line or a shape of a curve in multiple steps (endless steps).

Gear shift stage switching motor 72 of electric switching device 70 and position sensing sensor 81 are connected to control portion 24 via wiring connected to connector portion 73, gear shift stage switching motor 72 is driven in accordance with the operation by the passenger of hand operating portion 18 attached to handle 5, and driving body 79 is moved. In addition, various signals which also include a gear shift stage signal output from hand operating portion 18 pass through a wiring portion that electrically connects hand operating portion 18 and driving unit 20, and is configured to be input to and output from control portion 24, and gear shift stage switching motor 72 is driven by the signal (or signal from switching motor control portion provided on board 82) from control portion 24. In addition, the signal related to the positional information from position sensing sensor 81 is output to control portion 24 or the switching motor control portion, and gear shift stage switching motor 72 is driven in accordance with the signal related to the positional information.

In the embodiment, when sensing that switching body moving portion 62 (fork body 65, switching shaft 63, and interlocking tube 66) that is the interlocking component that is interlocked with gear shift stage switching body 61 moved from high speed stage switching position H side to low speed stage switching position L side, for example, from high speed stage switching position H to the intermediate position by position sensing sensor 81, the following action is achieved. In other words, by controlling motor 21 to temporarily decrease the auxiliary driving force by control portion 24, the switching operation to the low speed stage from the high speed stage is excellently performed.

In the above-described configuration, in a case where the passenger operates hand operating portion 18 in the high speed stage state and selects the low speed stage (first speed), gear shift stage switching motor 72 is driven and driving body 79 is moved to the position illustrated in FIG. 11. In addition, switching body moving portion 62 (fork body 65 or the like of switching body moving portion 62) moves to low speed stage switching position L by the biasing force of spring 69. In addition, in the state illustrated in FIG. 11, fork body 65 moves to abut against right case 22c by the biasing force of spring 69. In addition, arm portion 79b of driving body 79 is separated from interlocking tube 66, and a state where the biasing force of spring 69 does not act on electric switching device 70 including driving body 79 is achieved.

As switching body moving portion 62 is switched to low speed stage switching position L, as illustrated in FIG. 5, gear shift stage switching body 61 is interlocked with fork body 89, moves in a B direction, and abuts against engaging member 58 of high speed stage clutch 55. Accordingly, as illustrated in FIG. 6, engaging member 58 is switched to the tilted posture, and resultant force transmitting body 29 and high speed stage transmission gear 41 are disconnected from each other.

In this state, by stepping on pedal 8, as illustrated in FIGS. 4 and 5, crank shaft 7a rotates, and human power transmitting body 28 and interlocking tube body 23 rotate. At this time, interlocking tube body 23 is connected to low speed stage transmission gear 36 via low speed stage clutch 51 in the rotation direction. Therefore, the rotation of interlocking tube body 23 is transmitted to low speed stage transmission gear 36.

In addition, as motor 21 is driven and motor rotation shaft 21a is rotated, first deceleration gear 37 of deceleration mechanism 25 and intermediate shaft 44 rotate. According to this, second deceleration gear 38 and third deceleration gear 39 rotate, the rotation of second deceleration gear 38 is transmitted to low speed stage transmission gear 36, and the rotation of third deceleration gear 39 is transmitted to high speed stage transmission gear 41.

Accordingly, low speed stage transmission gear 36 and high speed stage transmission gear 41 respectively rotate, and at this time, as illustrated in FIGS. 4 to 6, low speed stage transmission gear 36 is connected to resultant force transmitting body 29 via low speed stage clutch 51 in the rotation direction. Therefore, the rotation of low speed stage transmission gear 36 is transmitted to resultant force transmitting body 29, resultant force transmitting body 29 rotates, chain 15 revolves as driving sprocket 13 rotates, and rear wheel 4 rotates. At this time, the resultant force that is a combination of the human power driving force which acts on crank shaft 7a and the auxiliary driving force of motor 21 is transmitted to resultant force transmitting body 29 from low speed stage transmission gear 36, and resultant force transmitting body 29 rotates according to the resultant force.

In addition, at this time, engaging member 56 of high speed stage clutch 55 is switched to the tilted posture, resultant force transmitting body 29 and high speed stage transmission gear 41 are disconnected from each other, and thus, the rotation of high speed stage transmission gear 41 is not transmitted to resultant force transmitting body 29.

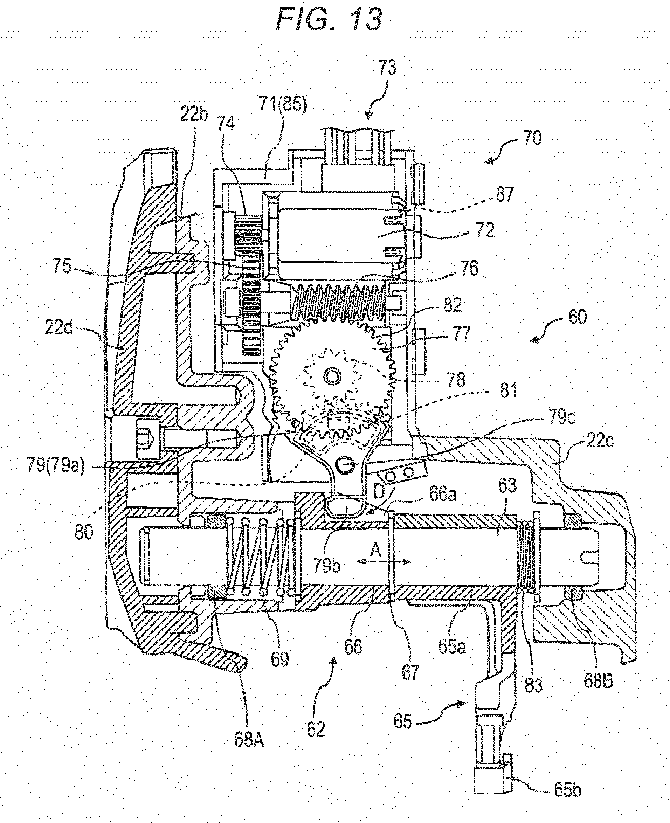

Meanwhile, in a case where the passenger operates hand operating portion 18 in the low speed stage state, and the passenger selects the high speed stage (second speed), gear shift stage switching motor 72 is driven, and driving body 79 is revolved in a D direction and is moved to the position illustrated in FIG. 14 via the positions illustrated in FIGS. 12 and 13 from the position illustrated in FIG. 11, and switching body moving portion (fork body 65 or the like of switching body moving portion 62) 62 moves to high speed stage switching position H while being against the biasing force of spring 69. In addition, at this time, gear shift stage switching motor 72 is driven, and first, driving body 79 is revolved in the D direction to the position at which arm portion 79b of driving body 79 abuts against interlocking tube 66, and after this, driving body 79 is further revolved in the D direction and is revolved in the D direction to the position illustrated in FIG. 14 from the intermediate position illustrated in FIG. 13. In addition, the position of arm portion 79b of driving body 79 is sensed at any time by position sensing sensor 81 that can detect the position of driving body 79 in multiple steps (endless steps), and consecutively, driving body 79 is revolved to the predetermined position, and switching body moving portion 62 moves to high speed stage switching position H.

Accordingly, as illustrated in FIG. 8, gear shift stage switching body 61 moves in the C direction being interlocked with fork body 89, and is separated from engaging member 56 of high speed stage clutch 55. Accordingly, as illustrated in FIG. 8, engaging member 56 is switched to the rising posture by the biasing force of biasing spring 57, and resultant force transmitting body 29 and high speed stage transmission gear 41 are disconnected from each other.

In this state, by stepping on pedal 8, crank shaft 7a rotates, and human power transmitting body 28 and interlocking tube body 23 rotate. At this time, interlocking tube body 23 is connected to low speed stage transmission gear 36 via low speed stage clutch 51 in the rotation direction. Therefore, the rotation of interlocking tube body 23 is transmitted to low speed stage transmission gear 36.

In addition, as motor 21 is driven and motor rotation shaft 21a is rotated, first deceleration gear 37 of deceleration mechanism 25 and intermediate shaft 44 rotate. According to this, second deceleration gear 38 and third deceleration gear 39 rotate, the rotation of second deceleration gear 38 is transmitted to low speed stage transmission gear 36, and the rotation of third deceleration gear 39 is transmitted to high speed stage transmission gear 41.

Accordingly, low speed stage transmission gear 36 and high speed stage transmission gear 41 respectively rotate, and at this time, high speed stage transmission gear 41 is connected to resultant force transmitting body 29 via high speed stage clutch 55 in the rotation direction. Therefore, the rotation of high speed stage transmission gear 41 is transmitted to resultant force transmitting body 29, resultant force transmitting body 29 rotates, and at this time, the combined driving force is transmitted to resultant force transmitting body 29 from high speed stage transmission gear 41, and resultant force transmitting body 29 rotates by the combined driving force.

At this time, low speed stage transmission gear 36 and high speed stage transmission gear 41 respectively rotate, but due to a difference in gear ratio, the rotation speed of high speed stage transmission gear 41 becomes higher than the rotation speed of low speed stage transmission gear 36. Accordingly, the rotation speed of resultant force transmitting body 29 also becomes higher than the rotation speed of low speed stage transmission gear 36, and as illustrated in FIG. 9, engaging member 52 of low speed stage clutch 51 is not engaged with tooth portion 29d of resultant force transmitting body 29, and low speed stage transmission gear 36 is maintained in an idling state.

In addition, the torque of the resultant force transmitted to resultant force transmitting body 29 from low speed stage transmission gear 36 in a case of switching the gear to the low speed stage (refer to FIGS. 5 and 6) is greater than the torque of the resultant force transmitted to resultant force transmitting body 29 from high speed stage transmission gear 41 in a case of switching the gear to the high speed stage (refer to FIGS. 8 and 9).

Therefore, for example, in a case of traveling on an upward slope by electric assist bicycle 1, the resultant force having high torque is transmitted to rear wheel 4 by operating hand operating portion 18 and selecting the low speed stage, and thus, it is possible to reduce the load of motor 21 or the passenger. In addition, in a case where the passenger desires to increase the traveling speed during the traveling on a flat road surface or the like, the torque of resultant force transmitting body 29 decreases but the rotation speed of resultant force transmitting body 29 increases by operating hand operating portion 18 and selecting the high speed stage, and thus, the rotation speed of rear wheel 4 increases, and the traveling speed of electric assist bicycle 1 can be easily increased.

In addition, according to the configuration, since electric switching device 70 which is the switching body moving mechanism is provided in driving unit 20, the gear shift stage wire transmitting mechanism (so-called shifter for gear shifting) which changes the operation of an operation lever or the like for switching the gear shift stage to the operation of the wire may not be attached to handle 5, and there is not a case where the movement of the hand that holds handle 5 is interfered. In addition, even when using electric assist bicycle 1 for a long period of time, a failure of the switching operation to the gear shift mechanism due to extension of the wire for gear shifting is not generated, and thus, it is possible to excellently perform the switching operation to the gear shift mechanism.

In addition, by installing electric switching device 70 including gear shift stage switching motor 72 as a gear shift stage switching driving source on the inside of unit case 22 that makes the outer shell portion of driving unit 20, a waterproof sealing material may not be installed in electric switching device 70, and as a result, it is also possible to excellently drive (move) the gear shift stage switching body when using small gear shift stage switching motor 72. In other words, since unit case 22 has a waterproof structure into which the water or the like does not enter, in electric switching device 70 installed on the inside of unit case 22, a sealing component, such as an O ring, may not be installed near driving body 79 which is an output component of electric switching device 70, or the like. When installing the sealing component, such as an O ring, it is necessary to use large gear shift stage switching motor 72 due to friction between the sealing components, but in the embodiment, there is not such a case, and small gear shift stage switching motor 72 can be used, and it is possible to realize reduction of manufacturing costs or small size of driving unit 20.

In addition, according to the configuration, the driving force from gear shift stage switching motor 72 which is the gear shift stage switching driving source is transmitted, magnet 80 is attached to driving body 79 which is the freely movable gear shift stage switching output component that moves gear shift stage switching body 61, and at a location which can oppose magnet 80, position sensing sensor 81 that senses the position of driving body 79 by the magnetic force of magnet 80 is provided. Accordingly, it is possible to excellently sense the position of driving body 79. In addition, in the embodiment, since position sensing sensor 81 is a linear hole element, and not only the gear shift stage position but also the intermediate position of the gear shift stage can be sensed by one linear hole element, and thus, it is advantageous that a specific position that also includes the intermediate position of driving body 79 can be excellently sensed while maintaining the extremely small number of components. However, position sensing sensor 81 may not necessarily the linear hole element, the plurality of hole elements which freely switch an ON state and an OFF state to each other at different positions may be used, and sensing may be performed by attaching a potentiometer to driving body 79.

In addition, according to the configuration, board 82 is provided in electric switching device 70 including gear shift stage switching motor 72 which is the gear shift stage switching driving source, and gear shift stage switching motor connection terminal 87 which is freely attachable to and detachable from gear shift stage switching motor 72 is directly attached to board 82. Accordingly, when gear shift stage switching motor 72 is attached to board 82, gear shift stage switching motor 72 may be mounted on gear shift stage switching motor connection terminal 87, and soldering by providing a terminal for additional solder fixing in the gear shift stage switching motor may not be performed. As a result, productivity during the manufacturing is improved, it is possible to achieve small space as board 82, and to promote small size of driving unit 20.

In addition, according to the configuration, the outer shell portion provided in electric switching device 70 including gear shift stage switching motor 72 which is the gear shift stage switching driving source is configured of plurality of case portions 71 (upper case 84 and lower case 85 in the embodiment) that are attachable to and detachable from each other. In addition, when gear shift stage switching motor 72 is driven such that the load against the biasing force of spring 69 that is the biasing mechanism acts on driving body 79 that is the output component of electric switching device 70 (when driving on high speed stage side in the embodiment), the following action is achieved. In other words, at the tooth portion of worm wheel 77 which is provided in electric switching device 70 and is meshed with cylindrical worm 76, the thrust reaction force of the driving force transmitted from gear shift stage switching motor 72 acts on a predetermined case portion (lower case 85 in the embodiment). Accordingly, in a case where a void or the like caused by a manufacturing error at a supporting part of lower case 85 or upper case 84 which supports driving body 79 is provided and the load is not applied, even in a case where a state where cylindrical worm 76 and worm wheel 77 are meshed with each other is not optimal, as the load from gear shift stage switching motor 72 acts, worm wheel 77 is at the optimal meshing position on lower case 85 side. Therefore, worm wheel 77 which transmits the driving force and cylindrical worm 76 can be brought into contact with each other at transmission efficiency of the excellent driving force. According to this, it is also possible to excellently drive driving body 79 by small gear shift stage switching motor 72, and to realize reduction of manufacturing costs or small size of driving unit 20.

In addition, according to the configuration, gear shift mechanism 17 is configured to shift a gear of the resultant force obtained by combining the human power driving force and the auxiliary driving force. Accordingly, there is also an advantage that an output in a torque gear shift range wider than that in a case of combining other driving forces by shifting a gear of any driving force of the human power driving force and the auxiliary driving force is possible.

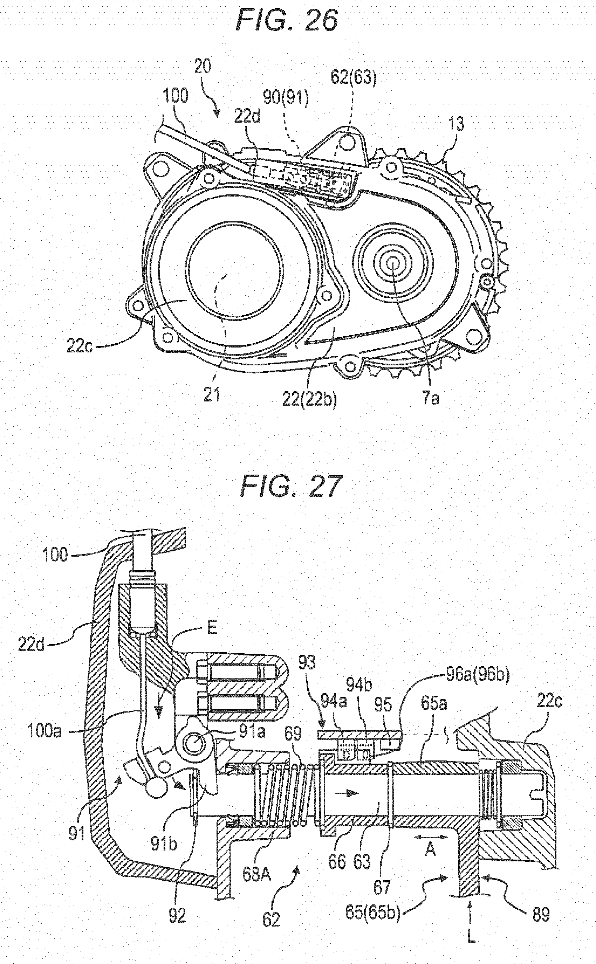

In addition, in the embodiment, wire interlocking type switching machine 90 illustrated in FIGS. 26 to 30 is configured to be usable instead of electric switching device 70 that is the switching body moving mechanism used in driving unit 20. In a case where wire interlocking type switching machine 90 is used, the hand operating portion for shifting a gear and the gear shift stage wire transmitting mechanism (so-called shifter for gear shifting) which transmits the operation of the hand operating portion for shifting the gear to the gear shift stage wire are provided in handle 5, and one end portion of wire 100 for transmitting the gear shift stage is connected to the gear shift stage wire transmitting mechanism (so-called shifter for gear shifting).

As illustrated in FIG. 27 or the like, even in a case of using wire interlocking type switching machine 90, fork body 65, interlocking tube 66, spring 69, and switching body moving portion 62, such as switching shaft 63, are used as common components of substantially the same structure as those in a case where electric switching device 70 is used (in only interlocking tube 66, position detection protruding piece portions 96a and 96b which will be described later are provided). As illustrated in FIGS. 26 to 28, wire interlocking type switching machine 90 includes interlocking ring 91 which is linked to the other end portion of wire (wire cable 100a) 100 through which the operation of the gear shift stage is transmitted by the gear shift stage hand operating portion, and gear shift stage detecting device 93 which detects the position (that is, the position of the gear shift stage) of switching body moving portion 62 (specifically, interlocking tube 66). Interlocking ring 91 freely revolves around shaft 91a, and locking arm 91b can be engaged with washer 92 locked to one end of switching shaft 63. In gear shift stage detecting device 93, plural numbers (two in the embodiment) of optical sensors 94a and 94b which freely switch the ON state and the OFF state to each other are provided, and plural (two in the embodiment) position detection protruding piece portions 96a and 96b for detecting the position are provided in interlocking tube 66.

In the configuration, in a case where the passenger operates hand operating portion 18 in a high speed stage state and selects the low speed stage (first speed), wire cable 100a of wire 100 for transmitting the gear shift stage extends in an E direction, and according to this, switching body moving portion 62 including switching shaft 63 or interlocking tube 66 and fork body 65 moves to low speed stage switching position L by the biasing force of spring 69. In addition, at this time, the light of both of optical sensors 94a and 94b is blocked by position detection protruding piece portions 96a and 96b and becomes in an OFF state, and it is sensed that switching body moving portion 62 moved to low speed stage switching position L.

Accordingly, as illustrated in FIGS. 5 and 6, engaging member 58 is switched to the tilted posture, resultant force transmitting body 29 and high speed stage transmission gear 41 are disconnected from each other, the resultant force that is a combination of the human power driving force and the auxiliary driving force of motor 21 is transmitted to resultant force transmitting body 29 from low speed stage transmission gear 36 and resultant force transmitting body 29 rotates in a low speed stage state by the resultant force.

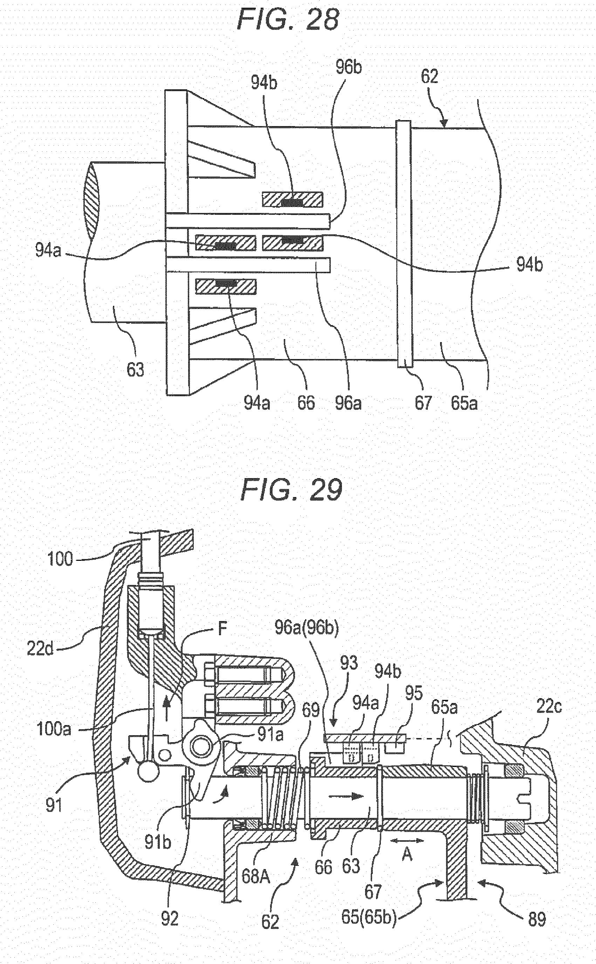

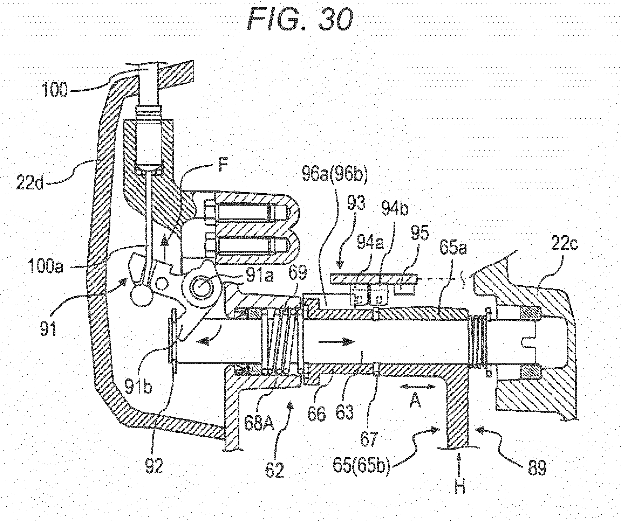

Meanwhile, in a case where the passenger operates the hand operating portion for shifting the gear in the low speed stage state and selects the high speed stage (second speed), as illustrated in FIGS. 29 and 30, wire cable 100a of wire 100 for transmitting the gear shift stage is pulled in an F direction, and according to this, switching body moving portion 62 including switching shaft 63 or interlocking tube 66 and fork body 65 moves to high speed stage switching position H against the biasing force of spring 69. In addition, at this time, at the intermediate position between the low speed stage and the high speed stage, while the light of optical sensor 94a by position detection protruding piece portion 96a is blocked and is in an OFF state, the light of optical sensor 94b is blocked and is in an ON state, and the intermediate position state is sensed. In addition, at high speed stage switching position H, the light of both of optical sensors 94a and 94b is not blocked and is in an ON state, and it is sensed that switching body moving portion 62 moves to high speed stage switching position H.

Accordingly, as illustrated in FIGS. 8 and 9, engaging member 56 is switched to the rising posture, resultant force transmitting body 29 and high speed stage transmission gear 41 are connected to each other, the resultant force that is a combination of the human power driving force and the auxiliary driving force of motor 21 is transmitted to resultant force transmitting body 29 from high speed stage transmission gear 41, and resultant force transmitting body 29 rotates in the high speed stage state by the resultant force.

In this manner, in a case of using wire interlocking type switching machine 90, the gear shift stage is excellently switched, and low speed stage switching position L, high speed stage switching position H, and the intermediate position thereof of switching body moving portion 62 can be detected.

In addition, in this manner, in a case of using wire interlocking type switching machine 90, and in a case of using electric switching device 70, it is also possible to use switching body moving portion 62 or the like which is a common component, and thus, it is convenient since easy change is possible in any type by changing the small number of components, and it is advantageous that the increase in manufacturing costs can be suppressed to be the minimum.

In addition, in any case, only the biasing force of spring 69 acts on gear shift stage switching body 61, a force of gear shift stage switching motor 72 of electric switching device 70 or a force caused by a pulling force of the wire does not act, and thus, a forcible force does not act on gear shift stage switching body 61 or engaging member 56 of high speed stage clutch 55 and excellent reliability can be obtained.

In addition, in the embodiment, a case where electric switching device 70 which is the switching body moving mechanism or wire interlocking type switching machine 90 is installed on the inside of driving unit 20 is described, but the invention is not limited thereto, and it is also possible to install electric switching device 70 or wire interlocking type switching machine 90 in the vicinity of driving unit 20. In addition, a case where electric switching device 70 is provided as the gear shift stage switching driving source that generates the driving force by moving the gear shift stage switching body, is described, but the invention is not limited thereto.

In addition, in the embodiment, a case where the force from driving sprocket 13 is transmitted to rear sprocket 14 via chain 15 by using chain 15 as the endless driving force transmitting body, is described. However, the invention is not limited thereto, and the force from the driving gear which corresponds to the driving sprocket may be transmitted to the rear gear via a toothed belt, by using the toothed belt as the endless driving force transmitting body.

In addition, in the embodiment, a case where two-staged gear shifting function is provided in driving unit 20 is described. However, the invention is not limited thereto, and as the deceleration gear, a deceleration gear for first to third stages that can decelerate in three stages, three one-way clutches for shifting the gear, and two selection clutches may be provided, only a one-way clutch for one speed may function during one speed, only a one-way clutch for one speed and a one-way clutch for two speeds may function during two speeds, and all of the one-way clutches may function during three speeds. Accordingly, it is possible to add a three-stage gear shift function to driving unit 20, and in this case, it is possible to shift the gear without a neutral state (idling state).

In addition, in the embodiment, a case where the gear shift mechanism which uses high speed stage clutch 55 or the low speed stage clutch is used is described, but it is needless to say that the invention can also be employed in a case where other types of gear shift mechanisms, such as a planetary gear transmission mechanism are used.

As described above, according to the present invention, by providing the gear shift mechanism which includes the plurality of selectable gear shift stages having different gear ratios and transmits the driving force to the resultant force transmitting body, in the driving unit, when traveling in the electric assist bicycle, by selecting the optimal gear shift stage in accordance with the inclination or the like of the traveling road surface, it is possible to reduce the load of the motor or the passenger, and the traveling appropriate for the traveling road surface is performed. In addition, in the driving unit and in the vicinity of the driving unit, by installing the switching body moving mechanism including the gear shift stage switching driving source which generates the driving force that moves the gear shift stage switching body, the gear shift stage wire transmitting mechanism (so-called shifter for shifting the gear) which changes the operation of the operation lever to the operation of the wire may not be attached to the handle, and the movement of the hand that holds the handle is not interfered. In addition, since a failure of a switching operation to the gear shift mechanism due to extension of the wire is not generated, it is possible to excellently perform the switching operation to the gear shift mechanism.

In addition, the electric switching device including the gear shift stage switching motor which is the gear shift stage switching driving source may be installed in the unit case that configures the outer shell portion of the driving unit. According to the configuration, the waterproof sealing material or the like may not be installed in the electric switching device, and as a result, it is also possible to excellently drive (move) the gear shift stage switching body by using small gear shift stage switching motor.

In addition, the board may be provided in the electric switching device including the gear shift stage switching motor which is the gear shift stage switching driving source, and the gear shift stage switching motor connecting terminal which is freely attachable to and detachable from the gear shift stage switching motor may be directly attached to the board. According to the configuration, when attaching the gear shift stage switching motor to the board, only the mounting on the gear shift stage switching motor connecting terminal may be performed, and the soldering with respect to the terminal of the gear shift stage switching motor may not be performed.

In addition, the outer shell portion provided in the electric switching device including the gear shift stage switching motor which is the gear shift stage switching driving source is configured of a plurality of cases that are attachable to and detachable from each other. In addition, when the gear shift stage switching motor is driven such that the load against the biasing force of the biasing mechanism acts on the output component of the electric switching device, in the tooth portion of the gear, such as the worm wheel that is provided in the electric switching device and is meshed with the cylindrical worm, the thrust reaction force of the driving force transmitted from the gear shift stage switching motor may act on the predetermined case. According to the configuration, it is possible to bring the worm wheel that transmits the driving force and the cylindrical worm into contact with each other at an excellent transmission efficiency.

In addition, the gear shift mechanism may shift a gear of the resultant force obtained by combining the human power driving force and the auxiliary driving force. According to the configuration, an output in a torque gear shift range wider than that in a case of combining other driving forces by shifting a gear of any driving force of the human power driving force and the auxiliary driving force is possible.

In addition, the driving force from the gear shift stage switching driving source may be transmitted to a freely movable gear shift stage switching output component that moves the gear shift stage switching body, a magnet is attached to the gear shift stage switching output component, and a position sensing sensor which senses a position of the gear shift stage switching output component by the magnetic force of the magnet may be provided at a location that can oppose the magnet. In addition, the position sensing sensor may be a linear hole element, and not only the gear shift stage position but also the intermediate position of the gear shift stage may also be sensed by one linear hole element.

In addition, in the driving unit, any of the electric switching device which uses the gear shift stage switching motor as the gear shift stage switching driving source, and the wire interlocking type switching machine which transmits the movement from the wire that transmits the operation by the manual gear shift stage operation can be selected and mounted, and the switching body moving portion which transmits the operation from the electric switching device to the gear shift stage switching body, and the switching body moving portion which transmits the operation from the wire interlocking type switching machine to the gear shift stage switching body may be shared.

In addition, the interlocking component which interlocks with the gear shift stage switching body or the gear shift stage switching body may be installed to be freely movable in a crank shaft or in parallel with the crank shaft, biasing mechanism which biases the gear shift stage switching body and the interlocking component which interlocks with the gear shift stage switching body in the crank shaft or in a predetermined direction parallel to the crank shaft, may be provided, and the driving force to the output component of the electric switching device may be configured to act in a direction against the biasing direction of the biasing mechanism.

In addition, the gear shift mechanism may shift a gear of the resultant force that is a combination of the human power driving force and the auxiliary driving force.

### INDUSTRIAL APPLICABILITY

The present invention can be employed in various electric assist bicycles which can travel by adding an auxiliary driving force generated by a motor to a human power driving force generated by a pedaling force from a pedal.

### REFERENCE MARKS IN THE DRAWINGS

1 electric assist bicycle
2 frame
3 front wheel
4 rear wheel
7 crank
7a, 201 crank shaft
8 pedal
12 battery (condenser)
13 driving sprocket (driving force output wheel body)
14 rear sprocket (rear portion wheel body)
15, 208 chain (endless driving force transmitting body)
17 gear shift mechanism
18 hand operating portion
20, 215 driving unit
21, 202 motor
22 unit case
23 interlocking tube body
24 control portion
25 deceleration mechanism
28 human power transmitting body
29 resultant force transmitting body
29d, 36a, 41a, 41d tooth portion
30, 47, 205 one-way clutch
31 torque sensor (human power sensing portion)
36 low speed stage transmission gear
41 high speed stage transmission gear
37 first deceleration gear
38 second deceleration gear
39 third deceleration gear
41 high speed stage transmission gear
41b small-diameter cylindrical portion
41c medium-diameter cylindrical portion
41e angle portion
44 intermediate shaft
51 low speed stage clutch
52, 56, 58 engaging member
53, 57 biasing spring
55 high speed stage clutch
60 gear shift stage switching mechanism
61 gear shift stage switching body
61a flange portion
61b attaching ring
61c mounting groove
61d chamfered shape portion (force imparting mechanism)
61e sectional concave part
61f cam surface (force imparting mechanism)
61g chamfered shape portion (force imparting mechanism)
61h concave and convex portion
62 switching body moving portion
63 switching shaft
65, 89 fork body
69, 83 spring
70 electric switching device
72 gear shift stage switching motor (gear shift stage switching driving source)
79 driving body
80 magnet
81 position sensing sensor
82 board
90 wire interlocking type switching machine
203 resultant force shaft
203a tooth
204 human power transmission shaft
207 output sprocket
209 output shaft
209a output gear
211 decelerator

## Claims

1. An electric assist bicycle (1) comprising:
a driving unit (20) including a motor (21);
a front wheel (3) and a rear wheel (4);
wherein the electric assist bicycle (1) is capable of traveling by adding an auxiliary driving force generated by the motor (21) to a human power driving force generated by a pedaling force from a pedal (8),
wherein the driving unit (20) is installed at an intermediate location between the front wheel (3) and the rear wheel (4),
wherein a resultant force transmitting body (29) that is freely rotatable by a resultant force that is a combination of the human power driving force and the auxiliary driving force, a driving force output shaft body to which rotation of the resultant force transmitting body (29) is transmitted, and a gear shift mechanism (60) which includes a plurality of selectable gear shift stages having different gear ratios and transmits a driving force to the resultant force transmitting body (29), are provided in the driving unit (20),
wherein the gear shift mechanism (60) includes a plurality of transmission gears that includes a low speed stage transmission gear (36) and a high speed stage transmission gear (41), and a gear shift stage switching body (61) that moves in accordance with a selected gear shift stage, and
wherein a switching body moving mechanism (60) including a gear shift stage switching driving source (72) that generates a driving force which moves the gear shift stage switching body (61) is installed in the driving unit (20) or in the vicinity of the driving unit (20),
**characterized in that**
a shaft center of a rotation shaft (21a) of the motor (21) which generates the auxiliary driving force and a shaft center of a crank shaft (7c) on which the human power driving force acts are different from each other.

2. The electric assist bicycle (1) according to claim 1,
wherein the gear shift stage switching driving source is a gear shift stage switching motor (72), and an electric switching device which is the switching body moving mechanism (70) including the gear shift stage switching motor (72) is installed on an inside of a unit case (22) that configures an outer shell portion of the driving unit (20).

3. The electric assist bicycle (1) according to one of claims 1 or 2,
wherein the driving force from the gear shift stage switching driving source (72) is transmitted to a freely movable gear shift stage switching output component (79) that moves the gear shift stage switching body (61), a magnet (80) is attached to the gear shift stage switching output component (79), and a position sensing sensor (81) which senses a position of the gear shift stage switching output component (79) by a magnetic force of the magnet (80) is provided at a location that can oppose the magnet (80).

4. The electric assist bicycle (1) according to claim 3,
wherein the position sensing sensor (81) is a linear hole element, and not only a gear shift stage position but also an intermediate position of a gear shift stage can also be sensed by one linear hole element.

5. The electric assist bicycle (1) according to one of claims 1 to 4,
wherein the gear shift stage switching driving source is a gear shift stage switching motor (72), a board (82) is provided in an electric switching device that is the switching body moving mechanism (70) having the gear shift stage switching motor (72), and a gear shift stage switching motor connection terminal (87) which is freely attachable to and detachable from the gear shift stage switching motor (72) is directly attached to the board (82).

6. The electric assist bicycle (1) according to one of claims 1 to 5,
wherein the gear shift stage switching driving source is a gear shift stage switching motor (72), an outer shell portion provided in the electric switching device that is the switching body moving mechanism (70) including the gear shift stage switching motor (72) is configured of a plurality of cases (71) that are attachable to and detachable from each other, and when the gear shift stage switching motor (72) is driven such that a load against a biasing force of biasing mechanism (69) acts on an output component (79) of the electric switching device (70), a thrust reaction force of the driving force transmitted from the gear shift stage switching motor (72) is configured to act on a tooth portion of a gear (76, 77) provided in the electric switching device in a predetermined case (85).

7. The electric assist bicycle (1) according to one of claims 1 to 6,
wherein any of the electric switching device which uses the gear shift stage switching motor (72) as the gear shift stage switching driving source, and a wire interlocking type switching machine (90) which transmits a movement from wire (100) that transmits an operation by a manual gear shift stage operation, is selectable and mountable in the driving unit (20), and
wherein a switching body moving portion (62) which transmits the operation from the electric switching device to the gear shift stage switching body (61), and the switching body moving portion that transmits the operation from the wire interlocking type switching machine (90) to the gear shift stage switching body (61), are shared.

8. The electric assist bicycle (1) according to one of claims 1 to 7,
wherein an interlocking component which interlocks with the gear shift stage switching body (61) or the gear shift stage switching body (61) is installed to be freely movable in a crank shaft (7c) or in parallel with the crank shaft (7c),
wherein biasing mechanism (69) which biases the gear shift stage switching body (61) or the interlocking component which interlocks with the gear shift stage switching body (61) in the crank shaft (7c) or in a predetermined direction parallel to the crank shaft (7c), is provided, and
wherein a driving force to output component (79) of the electric switching device that is the switching body moving mechanism (70) is configured to act in a direction against a biasing direction of the biasing mechanism (69).

9. The electric assist bicycle (1) according to one of claims 1 to 8, wherein the gear shift mechanism (60) shifts a gear of the resultant force that is a combination of the human power driving force and the auxiliary driving force.

## Patentansprüche

1. Fahrrad mit elektrischem Hilfsantrieb (1), mit:
einer Antriebseinheit (20) mit einem Motor (21);
einem Vorderrad (3) und einem Hinterrad (4);
wobei das Fahrrad mit elektrischem Hilfsantrieb (1) in der Lage ist, durch Addieren einer Hilfsantriebskraft, die von dem Motor (21) erzeugt wird, zu einer Antriebskraft durch menschliche Leistung, die durch eine Pedalkraft aus einem Pedal (8) erzeugt wird, sich fortzubewegen,
wobei die Antriebseinheit (20) an einer Zwischenstelle zwischen dem Vorderrad (3) und dem Hinterrad (4) montiert ist,
wobei ein zur Übertragung einer resultierenden Kraft dienender Körper (29), der durch eine resultierende Kraft frei drehbar ist, die eine Kombination der Antriebskraft durch menschliche Leistung und der Hilfsantriebskraft ist, einen Antriebskraftausgangswellenkörper, auf den die Drehung des Körpers zur Übertragung der resultierenden Kraft (29) übertragen wird, und ein Gangschaltungsmechanismus (60), der mehrere auswählbare Gangschaltstufen mit unterschiedlichen Übersetzungsverhältnissen enthält und eine Antriebskraft auf den Körper zur Übertragung der resultierenden Kraft (29) überträgt, in der Antriebseinheit (20) vorgesehen sind,
wobei der Gangschaltungsmechanismus (60) mehrere Getrieberäder, die ein Getrieberad für eine geringe Geschwindigkeitsstufe (36) und ein Getrieberad für eine hohe Geschwindigkeitsstufe (41) umfassen, und ferner einen Gangschaltungsstufenschaltkörper (61) aufweist, der sich entsprechend einer ausgewählten Gangschaltungsstufe bewegt, und
wobei ein Schaltungskörperbewegungsmechanismus (60) mit einer Gangschaltungsstufenschaltantriebsquelle (72), die eine Antriebskraft erzeugt, die den Gangschaltungsstufenschaltkörper (61) in Bewegung versetzt, in der Antriebseinheit (20) oder in der Nähe der Antriebseinheit (20) montiert ist,
**dadurch gekennzeichnet, dass**
eine Wellenmitte einer Drehwelle (21a) des Motors (21), der die Hilfsantriebskraft erzeugt, und eine Wellenmitte einer Kurbelwelle (7c), auf die die Antriebskraft durch menschliche Leistung einwirkt, sich voneinander unterscheiden.

2. Fahrrad mit elektrischem Hilfsantrieb (1) nach Anspruch 1, wobei die Gangschaltungsstufenschaltantriebsquelle ein Gangschaltungsstufenschaltmotor (72) ist, und eine elektrische Schalteinrichtung, die der Schaltungskörperbewegungsmechanismus (70) ist, der den Gangschaltungsstufenschaltmotor (72) enthält, auf einer Innenseite einer Gehäuseeinheit (22) montiert ist, die einen äußeren Schalenbereich der Antriebseinheit (20) bildet.

3. Fahrrad mit elektrischem Hilfsantrieb (1) nach Anspruch 1 oder 2, wobei die Antriebskraft aus der Gangschaltungsstufenschaltantriebsquelle (72) auf eine frei bewegliche Gangschaltungsstufenschaltausgangskomponente (79) übertragen wird, die den Gangschaltungsstufenschaltkörper (61) in Bewegung versetzt, wobei ein Magnet (80) an der Gangschaltungsstufenschaltausgangskomponente (79) angebracht ist, und ein Positionserfassungssensor (81), der eine Position der Gangschaltungsstufenschaltausgangskomponente (79) durch eine Magnetkraft des Magneten (80) erfasst, an einer Stelle vorgesehen ist, die dem Magneten (80) gegenüberliegt.

4. Fahrrad mit elektrischem Hilfsantrieb (1) nach Anspruch 3, wobei der Positionserfassungssensor (81) ein geradliniges Lochelement ist, und wobei nicht nur eine Gangschaltungsstufenposition sondern auch eine Zwischenposition einer Gangschaltungsstufe durch ein einzelnes geradliniges Lochelement erfassbar sind.

5. Fahrrad mit elektrischem Hilfsantrieb (1) nach einem der Ansprüche 1 bis 4,
wobei die Gangschaltungsstufenschaltantriebsquelle ein Gangschaltungsstufenschaltmotor (72) ist, wobei eine Platte (82) in einer elektrischen Schalteinrichtung vorgesehen ist, die der Schaltkörperbewegungsmechanismus (70), der den Gangschaltungsstufenschaltmotor (72) aufweist, ist, und wobei ein Gangschaltungsstufenschaltmotorverbindungsanschluss (87), der frei an dem Gangschaltungsstufenschaltmotor (72) anbringbar und davon abnehmbar ist, direkt an der Platte (82) angebracht ist.

6. Fahrrad mit elektrischem Hilfsantrieb (1) nach einem der Ansprüche 1 bis 5,
wobei die Gangschaltungsstufenschaltantriebsquelle ein Gangschaltungsstufenschaltmotor (72) ist, wobei ein äußerer Schalenbereich in der elektrischen Schalteinrichtung, die der Schaltkörperbewegungsmechanismus (70) ist, der den Gangschaltungsstufenschaltmotor (72) enthält, aus mehreren Gehäusen aufgebaut ist, die aneinander anbringbar und voneinander abnehmbar sind, und wenn der Gangschaltungsstufenschaltmotor (72) derart angesteuert wird, dass eine Last gegen eine Vorspannkraft eines Vorspannmechanismus (69) auf eine Ausgangskomponente (79) der elektrischen Schalteinrichtung (70) einwirkt, dann eine Schubreaktionskraft der aus dem Gangschaltungsstufenschaltmotor (72) übertragenen Antriebskraft entsprechend ausgebildet ist, auf einen Zahnbereich eines Zahnrads (76, 77) einzuwirken, das in der elektrischen Schalteinrichtung in einem vorbestimmten Gehäuse (85) vorgesehen ist.

7. Fahrrad mit elektrischem Hilfsantrieb (1) nach einem der Ansprüche 1 bis 6, wobei die elektrische Schalteinrichtung, die den Gangschaltungsstufenschaltmotor (72) als die Gangschaltungsstufenschaltantriebsquelle verwendet, und/oder eine Schalteinrichtung des Typs mit verriegeltem Seil (90), die eine Bewegung eines Seils (100) überträgt, das eine Betätigung einer manuellen Gangschaltungsstufenbetätigung überträgt, in der Antriebseinheit (20) auswählbar und montierbar sind, und
wobei ein Schaltkörperbewegungsbereich (62), der die Betätigung von der elektrischen Schalteinrichtung auf den Gangschaltungsstufenschaltkörper (61) überträgt, und der Schaltkörperbewegungsbereich, der die Betätigung von der Schalteinrichtung des Typs mit verriegeltem Seil (90) auf den Gangschaltungsstufenschaltkörper (61) überträgt, gemeinsam benutzt sind.

8. Fahrrad mit elektrischem Hilfsantrieb (1) nach einem der Ansprüche 1 bis 7, wobei eine Verriegelungskomponente, die eine Verriegelung mit dem Gangschaltungsstufenschaltkörper (61) ausführt, oder der Gangschaltungsstufenschaltkörper (61) so montiert ist, dass sie bzw. er in einer Kurbelwelle (7c) oder parallel zu der Kurbelwelle (7c) beweglich ist,
wobei ein Vorspannmechanismus (69), der den Gangschaltungsstufenschaltkörper (61) vorspannt, oder die Verriegelungskomponente, die den Gangschaltungsstufenschaltkörper (61) in der Kurbelwelle (7c) oder in einer vorbestimmten Richtung parallel zu der Kurbelwelle (7c) verriegelt, vorgesehen ist, und
wobei eine Antriebskraft auf die Ausgangskomponente (79) der elektrischen Schalteinrichtung, die der Schaltkörperbewegungsmechanismus (70) ist, ausgebildet ist, in einer Richtung gegen eine Vorspannrichtung des Vorspannmechanismus (69) zu wirken.

9. Fahrrad mit elektrischem Hilfsantrieb (1) nach einem der Ansprüche 1 bis 8, wobei der Gangschaltungsmechanismus (60) einen Gang der resultierenden Kraft schaltet, die eine Kombination aus der Antriebskraft durch menschliche Leistung und der Hilfsantriebskraft ist.

## Revendications

1. Vélo à assistance électrique (1) comprenant :
une unité d'entraînement (20) incluant un moteur (21) ;
une roue avant (3) et d'une roue arrière (4) ;
dans lequel le vélo à assistance électrique (1) est capable d'un déplacement en ajoutant une force d'entraînement auxiliaire générée par le moteur (21) à une force d'entraînement à énergie humaine générée par une force de pédalage à partir d'une pédale (8),
dans lequel l'unité d'entraînement (20) est installée à un emplacement intermédiaire entre la roue avant (3) et la roue arrière (4),
dans lequel un corps de transmission de force résultante (29) qui est rendu libre en rotation par une force résultante qui est une combinaison de la force d'entraînement à énergie humaine et de la force d'entraînement auxiliaire, un corps d'arbre de sortie de force d'entraînement auquel une rotation du corps de transmission de force résultante (29) est transmise, et un mécanisme de changement de pignon (60) qui inclut une pluralité de stades de changement de pignon sélectionnables présentant différents rapports de pignons et transmet une force d'entraînement au corps de transmission de force résultante (29), sont installés dans l'unité d'entraînement (20),
dans lequel le mécanisme de changement de pignon (60) inclut une pluralité de pignons de transmission qui inclut un pignon de transmission de stade de basse vitesse (36) et un pignon de transmission de stade de haute vitesse (41), et un corps de changement de stade de changement de pignon (61) qui se déplace conformément à un stade de changement de pignon sélectionné, et
dans lequel un mécanisme de déplacement de corps de changement (60) incluant une source d'entraînement de changement de stade de changement de pignon (72) qui génère une force d'entraînement qui déplace le corps de changement de stade de changement de pignon (61) est installé dans l'unité d'entraînement (20) ou à proximité de l'unité d'entraînement (20),
**caractérisé en ce que**
un centre d'arbre d'un arbre de rotation (21a) du moteur (21) qui génère la force d'entraînement auxiliaire et un centre d'arbre d'un arbre de manivelle (7c) sur lequel la force d'entraînement à énergie humaine agit sont différents l'un de l'autre.

2. Le vélo à assistance électrique (1) selon la revendication 1,
dans lequel la source d'entraînement de changement de stade de changement de pignon est un moteur de changement de stade de changement de pignon (72),
et un dispositif de changement électrique qui constitue le mécanisme de déplacement de corps de changement (70) incluant le moteur de changement de stade de changement de pignon (72) est installé sur un intérieur d'un boîtier d'unité (22) qui configure une partie de coque extérieure de l'unité d'entraînement (20).

3. Le vélo à assistance électrique (1) selon l'une de la revendication 1 ou 2,
dans lequel la force d'entraînement issue de la source d'entraînement de changement de stade de changement de pignon (72) est transmise à un composant de sortie de changement de stade de changement de pignon librement mobile (79) qui déplace le corps de changement de stade de changement de pignon (61), un aimant (80) est fixé au composant de sortie de changement de stade de changement de pignon (79), et
un capteur de détection de position (81) qui détecte une position du composant de sortie de changement de stade de changement de pignon (79) par une force magnétique de l'aimant (80) est disposé à un emplacement qui peut s'opposer à l'aimant (80).

4. Le vélo à assistance électrique (1) selon la revendication 3,
dans lequel le capteur de détection de position (81) est un élément à trous linéaire, et non seulement une position de stade de changement de pignon mais également une position intermédiaire d'un stade de changement de pignon peut aussi être détectée par un élément à trous linéaire.

5. Le vélo à assistance électrique (1) selon l'une des revendications 1 à 4,
dans lequel la source d'entraînement de changement de stade de changement de pignon est un moteur de changement de stade de changement de pignon (72),
une carte (82) est disposée dans un dispositif de changement électrique qui constitue le mécanisme de déplacement de corps de changement (70) doté du moteur de changement de stade de changement de pignon (72), et une borne de connexion de moteur de changement de stade de changement de pignon (87) qui est librement raccordable à ou détachable du moteur de changement de stade de changement de pignon est directement rattachée à la carte (82).

6. Le vélo à assistance électrique (1) selon l'une des revendications 1 à 5,
dans lequel la source d'entraînement de changement de stade de changement de pignon est un moteur de changement de stade de changement de pignon (72),
une partie de coque extérieure disposée dans le dispositif de changement électrique qui constitue le mécanisme de déplacement de corps de changement (70) incluant le moteur de changement de stade de changement de pignon (72) est constituée d'une pluralité de boîtiers (71) qui sont attachables l'un à l'autre et détachables l'un de l'autre, et lorsque le moteur de changement de stade de changement de pignon (72) est entraîné de sorte qu'une charge appliquée à une force d'inclinaison de mécanisme d'inclinaison (69) agit sur un composant de sortie (79) du dispositif de changement électrique (70), une force de réaction de poussée de la force d'entraînement transmise depuis le moteur de changement de stade de changement de pignon (72) est configurée pour agir sur une partie de dents d'un pignon (76, 77) disposé dans le dispositif de changement électrique dans un boîtier prédéterminé (85).

7. Le vélo à assistance électrique (1) selon l'une des revendications 1 à 6,
dans lequel l'un quelconque du dispositif de changement électrique qui utilise le moteur de changement de stade de changement de pignon (72) en tant que source d'entraînement de changement de stade de changement de pignon, et une machine de changement de type d'enclenchement à câble (90) qui transmet un mouvement depuis un câble (100) qui transmet une opération par une opération de stade de changement de pignon manuelle, est sélectionnable et installable dans l'unité d'entraînement (20), et
dans lequel une partie mobile de corps de changement (62) qui transmet l'opération d'un dispositif de changement électrique au corps de changement de stade de changement de pignon (61), et la partie mobile de corps de changement qui transmet l'opération depuis la machine de changement de type d'enclenchement à câble (90) au corps de changement de stade de changement de pignon (61), sont partagées.

8. Le vélo à assistance électrique (1) selon l'une des revendications 1 à 7,
dans lequel un composant d'enclenchement qui s'enclenche avec le corps de changement de stade de changement de pignon (61) ou le corps de changement de stade de changement de pignon (61) est installé pour être librement mobile dans un arbre de manivelle (7c) ou en parallèle avec l'arbre de manivelle (7c),
dans lequel est installé le mécanisme d'inclinaison (69) qui incline le corps de changement de stade de changement de pignon (61) ou le composant d'enclenchement qui s'enclenche avec le corps de changement de stade de changement de pignon (61) dans l'arbre de manivelle (7c) ou dans une direction prédéterminée parallèle à l'arbre de manivelle (7c), et
dans lequel une force d'entraînement vers un composant de sortie (79) du dispositif de changement électrique qui constitue le mécanisme de déplacement de corps de changement (70) est configuré pour agir dans une direction contre une direction d'inclinaison du mécanisme d'inclinaison (69).

9. Le vélo à assistance électrique (1) selon l'une des revendications 1 à 8,
dans lequel le mécanisme de changement de pignon (60) change un pignon de la force résultante qui consiste en une combinaison de la force d'entraînement à énergie humaine et de la force d'entraînement auxiliaire.
